# EUROPÄISCHE PATENTANMELDUNG

(11) **EP 1 324 236 A1**
(43) Veröffentlichungstag der Anmeldung: **02.07.2003**
(21) Anmeldenummer: 01130884.8
(22) Anmeldetag: 27.12.2001
(51) Int. Cl.: G06F 17/60, G06F 17/16

(54) **Bestimmen einer Kennfunktion aus Matrix mit Anreichern und Verdichten**

(71) Anmelder: SAP Aktiengesellschaft, 69190 Walldorf (DE)
(72) Erfinder: Pulst, Uwe, 69226 Nussloch (DE); Löfflad, Armin, 69168 Wiesloch (DE)

(57) **Zusammenfassung**

Ein computergestütztes Verfahren (401) dient zum Bestimmen einer Kennfunktion Y aus einer Matrix X₀, die eine vorgegebene Zahl Datensätze (DS) mit klassifizierbaren Merkmalen (M) enthält. Bearbeiten (430) erfolgt zunächst durch Anreichern (431) und Verdichten (432): Unter Beibehaltung der Zahl der Datensätze wird die Matrix durch Klassen (K) für die Merkmale (M) angereichert (431). Unter Verringerung der Zahl der Datensätze (DS) wird die Matrix verdichtet. Schließlich erfolgt das Berechnen (440) der Kennfunktion Y unter Berücksichtigung der Mehrzahl der Datensätze der bearbeiteten Matrix.

## Beschreibung

### Gebiet der Erfindung

Im allgemeinen betrifft die vorliegende Erfindung die technische Verarbeitung von Daten mit einem Computersystem, ein Datenverarbeitungsverfahren und ein Datenverarbeitungsprogramm. Im besonderen betrifft die Erfindung Verfahren, Programm und System zum Ermitteln einer Kennfunktion aus einer gegebenen Matrix.

### Hintergrund

Daten sind Grundlage für Entscheidungen in allen Bereichen der Wirtschaft. Nur in den wenigsten Fällen evaluieren die Entscheidungsträger die Daten direkt; in den meisten Fällen bedarf es einer vorherigen Datenaufbereitung nach Vorgaben.

Im Finanzbereich dienen beispielsweise Kreditdaten zur Abschätzung von Risiken. Die entsprechenden Vorgaben sind teilweise normiert. Stellvertretend sei hier die Diskussion um "Baseler Akkord/Basel II" erwähnt, einer geplanten Neufassung der internationalen Richtlinien zur angemessenen Eigenkapitalausstattung von Kreditinstituten. In der Bundesrepublik Deutschland ist außerdem das Bundesaufsichtsamt für Kreditwesen (BAKred) zuständig.

Im folgenden werden die zu verarbeitenden Daten als Matrizen (Arbeitstabellen) mit Zeilen und Spalten betrachtet, wobei eine Zeile einem Datensatz (DS) entspricht. Das Computersystem implementiert die Matrizen in bekannter Art und Weise. Verarbeitungsverfahren und Verarbeitungsprogramm steuern das Computersystem zur Berechnung einer Kennfunktion entsprechend der Vorgaben. Die berechnete Kennfunktion zeigt die Abhängigkeit einer ersten Größe von einer zweiten Größe auf. Im vereinfachten Fall ist die Kennfunktion auf einzelne Kennzahlen reduziert.

Um beim Finanzbeispiel zu bleiben: die Kennfunktion beschreibt den im äußersten Fall zu erwartenden Verlust (Größenordnung von Milliarden Euro) aus Geschäften eines Kreditportfolios. Genauer, die Kennfunktion gibt an, mit welcher Wahrscheinlichkeit (z.B. 99 %) dieser Verlust nicht überschritten wird. Die Berechnungen werden üblicherweise auf ein Jahr bezogen.

Technische Einschränkungen sind gegeben durch Ressourcen, Rechenzeit und Genauigkeit. Mit anderen Worten, verfügbare Computersysteme müssen die Kennfunktion innerhalb einer vorgegebenen Zeit mit hinreichender Genauigkeit berechnen (Anforderungen).

Weitere Einschränkungen beruhen auf der Arbeitsteilung zwischen Software-Hersteller (z.B. SAP AG, Walldorf) und Anwender (z.B. Finanzunternehmen). Einerseits muß der Hersteller die öffentlichen Vorgaben (vgl. Basel) berücksichtigen; andererseits darf der Hersteller anwendungsspezifische Vorgaben nicht an Wettbewerber des Anwenders weitergeben. Mit anderen Worten, der Anwender behält sein Datenverarbeitungsmodell (z.B. Portfolio-Modell) als Geschäftsgeheimnis.

Die Verarbeitungsprogramme müssen deshalb technische Schnittstellen aufweisen, mit denen der Anwender Funktionen programmieren kann, ohne auf den Hersteller angewiesen zu sein ("customizing", "user exits").

Um diese und andere Anforderungen zu erfüllen, ergeben sich zusammenfassend die folgenden technischen Aufgaben: Verkürzen der Berechnungszeit bei hinreichender Genauigkeit (ZEIT); Verkleinern der Systemressourcen (Speicher und Bandbreite), die zur Berechnung notwendig sind (RESSOURCEN); Festlegen der Reihenfolge von Bearbeitungsschritten (REIHENFOLGE); Prüfen der Richtigkeit der Bearbeitungsschritte vor und nach deren Ausführung (PRÜFEN); Berücksichtigen von Änderungen an der ursprünglichen Matrix, die während der Berechnung eintreten (ÄNDERN); sowie Einrichten von Schnittstellen zum Definieren und Präzisieren von Bearbeitungsschritten (SCHNITTSTELLEN).

Erfindungsgemäße Verfahren, Systeme und Computerprogramme nach den Hauptansprüchen erfüllen die genannten Anforderungen. Bevorzugte Ausführungsformen sind Gegenstand der Unteransprüche.

### Zusammenfassung

Die vorliegende Erfindung betrifft ein Verfahren zur Datenverarbeitung mit programmgesteuertem Prozessor, zum Bestimmen einer Kennfunktion aus einer Matrix mit einer vorgegebenen Zahl von Datensätzen mit klassifizierbaren Merkmalen. Das Verfahren ist gekennzeichnet durch Ausführen eines Verfahrensschritts Bearbeiten in den beiden Bearbeitungsarten Anreichern der Matrix mit Klassen für die Merkmale, wobei die Zahl der Datensätze erhalten bleibt, und Verdichten, entsprechend den Klassen unter Verringerung der Zahl der Datensätze; sowie Ausführen eines Verfahrensschritts Berechnen der Kennfunktion unter Berücksichtigung der Mehrzahl der Datensätze der bearbeiteten Matrix.

Bevorzugte Ausführungsformen sind:
- das Berechnen der Kennfunktion in der Bearbeitungsart Anreichern;
- das Berechnen der Kennfunktion unter Zuhilfenahme einer weiteren Matrix, die mit der bearbeiteten Matrix verknüpft wird;
- das Ableiten der Klassen nach vorbestimmten Regeln aus den Merkmalen beim Anreichern;
- das Ergänzen durch vorbestimmte Standardwerte gemäß den Regeln;
- das Anwenden der Regeln auf jeweils auf einen Datensatz so, daß Merkmal und Klasse in diesem einen Datensatz verbleiben;
- das Überscheiben des Merkmals durch die Klasse;
- das Anwenden der Regeln auf jeweils mindestens einen ersten Datensatz und einen zweiten Datensatz, wobei Merkmale aus beiden Datensätzen eine Klasse bestimmen;
- das Übernehmen der Klasse in mindestens einen der beiden Datensätze;
- das Wählen einer dominierenden Klasse bei unterschiedlichen Merkmalen, wobei die Klasse einem der beiden Merkmale entspricht oder übergeordnet ist;
- das Anwenden der Regeln auf jeweils alle Datensätze, so daß Merkmale aus allen Datensätzen eine Klasse bestimmen;
- das Anwenden einer Regel jeweils für die Kombination einer Merkmalsgruppe mit einer Klassengruppe, beim Anreichern;
- das Anwenden einer Kettenregel;
- das Ausführen einzelner Ausführungen des Verfahrensschritts Bearbeiten in der Bearbeitungsart Anreichern derart, daß Elemente eines Datensatzes innerhalb des gleichen Datensatzes verbleiben;
- das Wiederholen des Verfahrensschritts Bearbeiten;
- das Ausführen des Verfahrensschritts Berechnen der Kennfunktion mit der letztmalig durch Verdichten bearbeiteten Matrix;
- das Bearbeiten in der Bearbeitungsart Verdichten bis zu einer vorbestimmten Zahl Ausführungen;
- das Ausführen des Verfahrensschritts Bearbeiten in Kombination der Bearbeitungsarten Anreichern und Verdichten;
- das Anreichern vor dem Verdichten derart, daß Merkmale als Klassen unverändert übernommen werden;
- das Anwenden der Regeln sowohl auf das Verdichten als auch auf das Anreichern;
- das Berücksichtigen korrelierender Ausprägungen von Merkmalen und Klassen beim Anreichern und Verdichten;
- das Bearbeiten und Berechnen an Matrizen, die im Hauptspeicher implementiert sind;
- die Steuerung des programmgesteuerten Prozessors nach einem vorbestimmten Schema;
- die Modifizierbarkeit des vorbestimmten Schemas unabhängig von einem Interpreter;
- die Steuerung des Prozessors durch sequentielles Abarbeiten des Schemas;
- das Präzisieren einzelner Schritte des Schemas in Unter-Schemen;
- das Spezialisieren der Unter-Schemen auf Anreichern und Verdichten;
- das Prüfen auf Sequenzen von Bearbeitungsschritten der Art Anreichern vor dem Abarbeiten des Schemas, wobei bei den Sequenzen Anreichern innerhalb der Datensätze erfolgt, so daß die Bearbeitungsschritte parallel ausgeführt werden;
- das Verwenden einer Schnittstelle, wobei zum Ausführen des Verfahrensschritts Bearbeiten Datensätze von der Schnittstelle gelesen, von einem Erweiterungsprogramm bearbeitet, und von der Schnittstelle wieder in die Matrix geschrieben werden;
- das Verwenden einer Schnittstelle, die in XML definiert ist;
- das Kennzeichnen eines Datensatzes, nachdem der Schritt Bearbeiten and diesem Datensatz durchgeführt wurde;
- das Speichern von Zwischenergebnissen;
- das Berücksichtigen aller Datensätze im Schritt Berechnen;
- das Verdichten von Datensätzen aus einer ersten Matrix und aus einer zweiten Matrix;
- das Testen auf Gleichheit von Matrixelementen nach dem Bearbeiten; sowie
- das Verwenden der Merkmale und Klassen als Zahlen, Texte, Kurzwörter, Datenbankzeiger, Hauptspeicherzeiger oder Tabellen.

Bevorzugt ist das Ausführen des Verfahrens durch einen Computer, der sowohl Steuerprogramm als auch Matrizen im Hauptspeicher verwaltet. Bevorzugt ist die Anwendung des Verfahrens im Finanzbereich, wobei eine solches Schema verwendet wird, das die Kennfunktion als Wahrscheinlichkeit eines finanziellen Verlustes mit vorgegebener Größenordnung beschreibt.

Die vorliegende Erfindung betrifft auch ein Computersystem zum Ausführen des Verfahrens; einen Programmträger mit computerlesbarem Medium, auf dem computerlesbare Programmcodemittel hinterlegt sind, die zur Ausführung des Verfahren nach jedem der Ansprüche dienen, sowie ein Computerprogrammprodukt mit Programminstruktionen, die einen Prozessor dazu veranlassen, die Verfahrensschritte auszuführen.

Das Computerprogrammprodukt verfügt über Instruktionen für einen Prozessor, das Computerprogrammprodukt zum Bestimmen einer Kennfunktion aus einer Matrix mit einer vorgegebenen Zahl von Datensätzen mit klassifizierbaren Merkmalen. Das Computerprogrammprodukt ist gekennzeichnet durch Instruktionen zum Ausführen eines Verfahrensschritts Bearbeiten in den beiden Bearbeitungsarten Anreichern der Matrix mit Klassen für die Merkmale, wobei die Zahl der Datensätze erhalten bleibt, und Verdichten, entsprechend den Klassen unter Verringerung der Zahl der Datensätze; sowie Instruktionen zum Ausführen eines Verfahrensschritts Berechnen der Kennfunktion unter Berücksichtigung der Mehrzahl der Datensätze der bearbeiteten Matrix.

### Kurzbeschreibung der Zeichnungen

- FIG. 1: zeigt ein vereinfachtes Blockschaltbild eines Computersystems;
- FIG. 2: zeigt das Bestimmen einer Kennfunktion aus einer Eingangsmatrix gemäß dem Stand der Technik;
- FIG. 3: zeigt ein vereinfachtes Ablaufdiagramm zum Bestimmen der Kennfunktion entsprechend der vorliegenden Erfindung (mit Anreichern und Verdichten);
- FIG. 4: zeigt die Eingangsmatrix als Matrix der Ordnung Null;
- FIG. 5: zeigt die Kennfunktion und einen Schwellwert;
- FIG. 6: zeigt das Berechnen einer Kennfunktion aus der Eingangsmatrix über Zwischenmatrizen;
- FIG. 7: zeigt Anreichern in der Ausprägung LOKAL in vereinfachter Darstellung;
- FIG. 8: zeigt Anreichern in der Ausprägung GLOBAL in vereinfachter Darstellung;
- FIG. 9: zeigt Anreichern in der Ausprägung LOKAL in ausführlicher Darstellung;
- FIG. 10: zeigt Anreichern in der Ausprägung GLOBAL in ausführlicher Darstellung;
- FIG. 11: zeigt Verdichten in vereinfachter Darstellung;
- FIG. 12: zeigt Einzelheiten für eine Regel zum Verdichten;
- FIG. 13: zeigt Verdichten in ausführlicher Darstellung, angewendet auf mehrere Datensätze der Eingangsmatrix, die zu einem Datensatz einer Zwischenmatrix verdichtet werden;
- FIG. 14: zeigt ein Bearbeitungsschema anhand eines Beispiels;
- FIG. 15: zeigt ein Computerprogramm mit Interpreter, das Schema, Regeln, sowie Matrizen;
- FIG. 16: zeigt das Festlegen der Reihenfolge von Schritten;
- FIG. 17: zeigt die Verwendung eines Erweiterungsprogramms, das über eine Schnittstelle mit der Matrix kommuniziert und dabei Anreichern und/oder Verdichten ausführt;
- FIG. 18: zeigt ein Ablaufdiagramm für die Schritte Lesen, Bearbeiten (Anreichern/Verdichten) angewendet auf Datensätze unter Verwendung des Erweiterungsprogramms;
- FIG. 19: zeigt optionales Testen eines Matrixelementes auf Veränderung durch das Erweiterungsprogramm;
- FIG. 20: zeigt eine Tabelle mit Merkmalen und Klassen, jeweils in Ausprägung und Gruppe;
- FIG. 21: zeigt eine Tabelle für Regeln; und
- FIG. 22: zeigt Anreichern in mehreren Schritten unter Verwendung einer Kettenregel.

### Gliederung

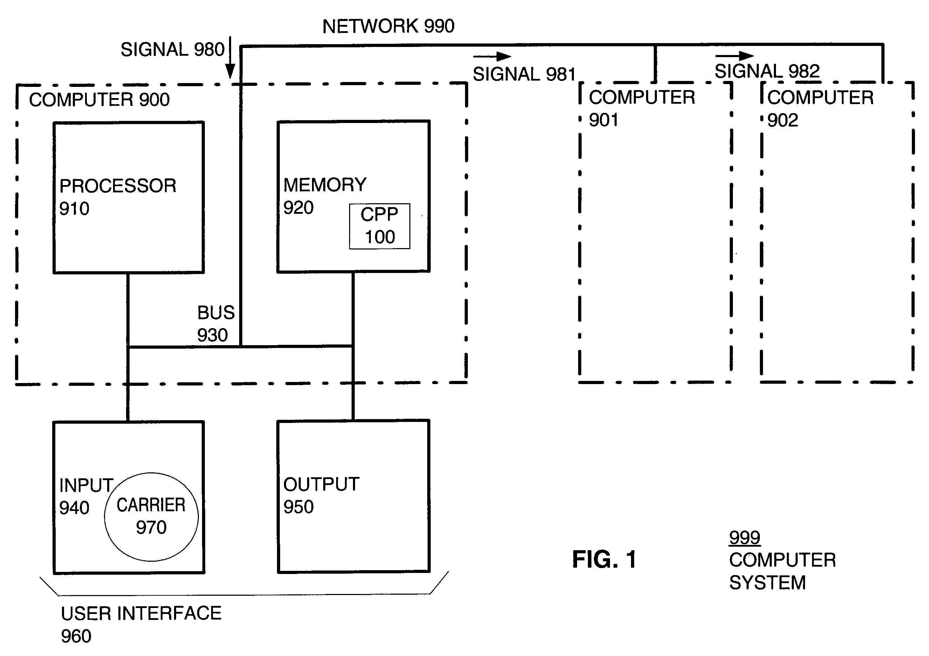

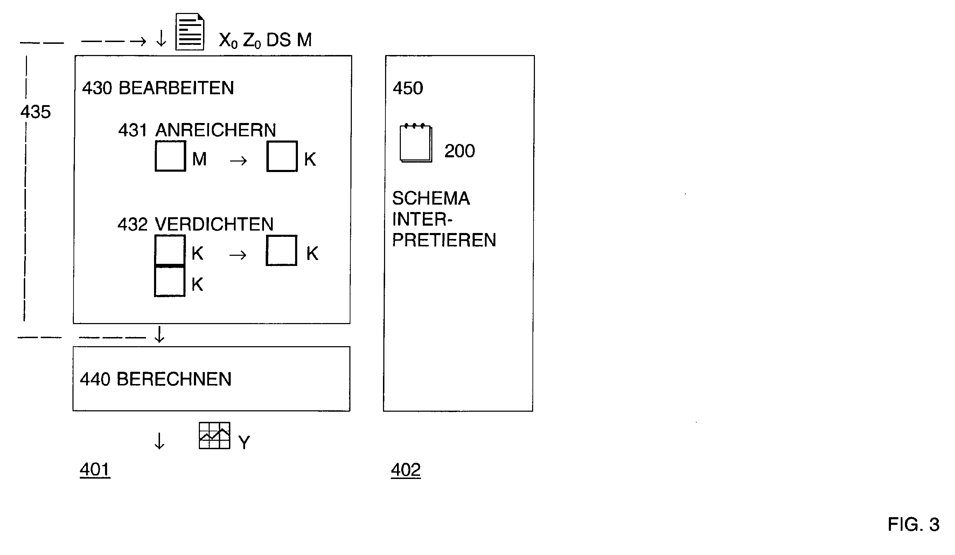

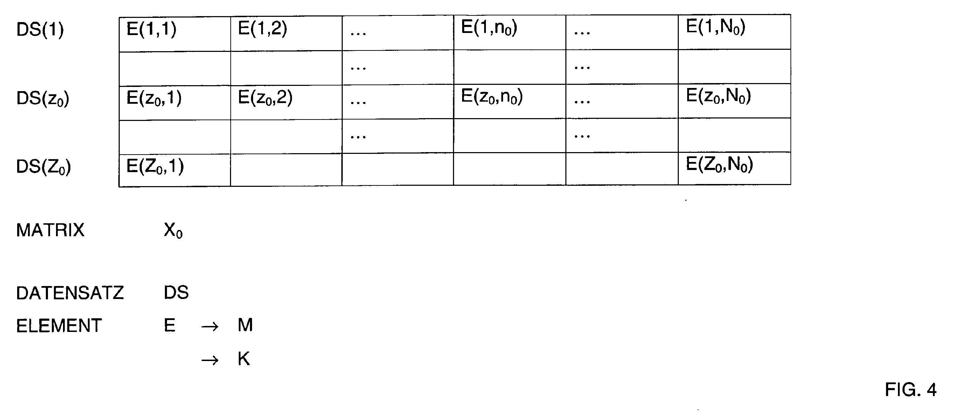

Nach der Vorstellung eines Computersystems (FIG. 1), auf dem die Erfindung implementiert werden kann, werden zunächst Lösungen zu den genannten Aufgaben vorgestellt (FIG. 3). Die Zeichnungen werden einzeln vorgestellt (FIGS. 4-22). Weitere Aspekte werden diskutiert. Abschließend wird die integrative Lösung aller Aufgaben am Beispiel einer Finanzanwendung vorgestellt.

Erfindungsgemäß werden beim Bestimmen der Kennfunktion aus einer Matrix die Aufgaben ZEIT und RESSOURCEN gelöst - in einer bevorzugten Ausführungsform - durch Ausführen von Bearbeiten als Anreichern und Verdichten und zum einmaligen Berechnen der Funktion unter Berücksichtigung der meisten Datensätze der verdichteten Matrix. Das Anreichern kann lokal oder global erfolgen.

Erfindungsgemäß wird die Aufgabe REIHENFOLGE durch das Festlegen eines Schemas gelöst.

Erfindungsgemäß wird die Aufgabe PRÜFEN durch das Evaluieren des Schemas vor der Berechnung gelöst. Dabei werden vorbestimmte Kriterien auf das Schema angewandt (z.B. Konsistenzprüfung). Vergleichen von Matrixelementen vor und nach dem Bearbeiten ist ebenfalls vorgesehen.

Erfindungsgemäß wird die Aufgabe ÄNDERN durch das Kennzeichnen der ausgeführten Bearbeitungsschritte in den jeweiligen Datensätzen gelöst.

Erfindungsgemäß werden SCHNITTSTELLEN vorgesehen, die im Schema verwaltet werden können. Aufgrund der Definition der Berechnungen im Schema selbst ist es möglich, einzelne Berechnungsroutinen unabhängig voneinander erstellen zu können.

In der folgenden Beschreibung werden englische Fachbegriffe, Synonyme und Inhaltsbeispiele durch Anführungszeichen " " markiert. In den Zeichnungen sind nicht näher betrachtete Elemente durch Ellipse "..." symbolisiert. Bezugszeichen und Druckschriften sind vor den Ansprüchen aufgelistet.

### Computersystem in FIG. 1

FIG. 1 zeigt ein vereinfachtes Blockschaltbild eines Computernetzsystems 999 mit einer Vielzahl von Computern (oder 90q, q=0-Q-1, Q beliebig).

Die Computer 900-902 sind über ein Netzwerk 990 ("network") verbunden. Der Computer 900 umfaßt einen Prozessor 910 ("processor"), einen Speicher 920 ("memory"), einen Bus 930 und wahlweise eine Eingabeeinrichtung 940 ("input") und eine Ausgabeeinrichtung 950 ("output"; Ein- und Ausgabeeinrichtung ergeben Benutzerschnittstelle 960 "user interface"). Die Erfindung liegt als Computerprogrammprodukt (CPP) 100 (oder 10q, wobei q=0-Q-1, Q beliebig), als Programmträger 970 und als Programmsignal 980 vor. Diese Komponenten werden im folgenden als Programm bezeichnet.

Die Elemente 100 und 910-980 des Computers 900 verallgemeinern die entsprechenden Elemente 10q und 91q-98q (gezeigt für q=0 im Computer 90q).

Der Computer 900 ist beispielsweise ein konventioneller Personalcomputer (PC), ein Multiprozessorcomputer, eine Mainframecomputer, eine tragbarer oder ein stationärer PC oder dergleichen.

Der Prozessor 910 ist beispielsweise ein Zentralprozessor (CPU), ein Mikrocontroller (MCU), oder ein digitaler Signalprozessor (DSP).

Der Speicher 920 symbolisiert Elemente, die Daten und Befehle entweder zeitweilig oder dauerhaft speichern. Obwohl zum besseren Verständnis der Speicher 920 als Teil des Computers 900 gezeigt ist, kann die Speicherfunktion im Netzwerk 990 auch an anderer Stelle implementiert werden, beispielsweise in den Computern 901/902 oder im Prozessor 910 selbst (z.B. Cache, Register). Der Speicher 920 kann ein Read-Only-Memory (ROM), ein Random-Access-Memory (RAM) oder ein Speicher mit anderen Zugriffsoptionen sein. Der Speicher 920 wird physisch auf einem computerlesbaren Programmträger implementiert, zum Beispiel auf: (a) einem magnetischen Träger (Festplatte, Diskette, Magnetband); (b)einem optischen Träger (CD-ROM, DVD); (c) einem Halbleiterträger (DRAM, SRAM, EPROM, EEPROM); oder auf einem beliebig anderem Medium (z.B. Papier).

Wahlweise ist der Speicher 920 über verschiedene Medien verteilt. Teile des Speichers 920 können fest oder austauschbar angebracht sein. Zum Lesen und Schreiben benutzt der Computer 900 bekannte Mittel wie Diskettenlaufwerke oder Bandlaufwerke.

Der Speicher 920 speichert Unterstützungskomponenten wie zum Beispiel ein Bios (Basic Input Output System), ein Betriebssystem (OS), eine Programmbibliothek, einen Compiler, einen Interpreter oder ein Textverarbeitungsprogramm. Unterstützungskomponenten sind kommerziell verfügbar und können auf dem Computer 900 von Fachleuten installiert werden. Zum besseren Verständnis sind diese Komponenten nicht dargestellt.

CPP 100 umfaßt Programminstruktionen und wahlweise Daten, die den Prozessor 910 unter anderem dazu veranlassen, die Verfahrensschritte 430-450 der vorliegenden Erfindung auszuführen. Die Verfahrensschritte werden später im Detail erläutert. Mit anderen Worten, das Computerprogramm 100 definiert die Funktion des Computers 900 und dessen Interaktion mit dem Netzwerksystem 999. Ohne hier eine Einschränkung zu beabsichtigen, CPP 100 kann beispielsweise als Quellcode in einer beliebigen Programmiersprache und als Binärcode in kompilierter Form vorliegen. Der Fachmann ist in der Lage, CPP 100 in Verbindung mit jeder der zuvor erläuterten Unterstützungskomponente (z.B. Compiler, Interpreter, Betriebssystem) zu benutzen.

Obwohl CPP 100 als im Speicher 920 gespeichert dargestellt ist, kann CPP 100 aber auch an beliebig anderer Stelle gespeichert sein. CPP 100 kann ebenfalls auf dem Programmträger 970 gespeichert sein.

Der Programmträger 970 ist außerhalb des Computers 900 dargestellt. Um CPP 100 auf den Computer 900 zu übertragen, kann der Träger 970 in das Eingabegerät 940 eingeführt werden. Der Träger 970 ist als ein beliebiger, computerlesbarer Träger implementiert, wie zum Beispiel als eines der zuvor erläuterten Medien (vgl. Speicher 920). Im allgemeinen ist der Träger 970 ein Erzeugnis, das ein computerlesbares Medium enthält, auf dem computerlesbare Programmcodemittel hinterlegt sind, die zur Ausführung des Verfahrens der vorliegenden Erfindung dienen. Des weiteren kann das Programmsignal 980 ebenfalls CPP 100 beinhalten. Das Signal 980 wird über das Netzwerk 990 zum Computer 900 übertragen.

Die ausführliche Beschreibung von CPP 100, Träger 970 und Signal 980 ist anzuwenden auf die Programmträger 971/972 (nicht gezeigt), auf das Programmsignal 981/982, sowie auf das Computerprogrammprodukt (CPP) 101/102 (nicht gezeigt), welches vom Prozessor 911/912 (nicht gezeigt) im Computer 901/902 ausgeführt wird.

Die Eingabeeinrichtung 940 steht für eine Einrichtung, die Daten und Anweisungen zur Verarbeitung durch den Computer 900 bereitstellt. Beispielsweise ist die Eingabeeinrichtung 940 eine Tastatur, eine Zeigeeinrichtung (Maus, Trackball, Cursorpfeile), Mikrofon, Joystick, Scanner. Obwohl es sich bei den Beispielen allesamt um Einrichtungen mit menschlicher Interaktion handelt, kann die Einrichtung 940 auch ohne menschliche Interaktion auskommen, wie zum Beispiel ein drahtloser Empfänger (z.B. mittels Satellitenoder terrestrischer Antenne), ein Sensor (z.B. ein Thermometer), ein Zähler (z.B. ein Stückzahlzähler in einer Fabrik). Die Eingabeeinrichtung 940 kann ebenfalls zum Lesen des Trägers 970 verwendet werden.

Die Ausgabeeinrichtung 950 steht für eine Einrichtung, die Anweisungen und Daten anzeigt, die bereits verarbeitet wurden. Beispiele dafür sind ein Monitor oder eine anderer Anzeige (Kathodenstrahlröhre, Flachbildschirm, Flüssigkristallanzeige, Lautsprecher, Drucker, Vibrationsalarm). Ähnlich wie bei der Eingabeeinrichtung 940 kommuniziert die Ausgabeeinrichtung 950 mit dem Benutzer, aber sie kann ebenfalls mit anderen Computern kommunizieren.

Die Eingabeeinrichtung 940 und die Ausgabeeinrichtung 950 können in einer einzigen Einrichtung kombiniert werden. Beide Einrichtungen 940, 950 können wahlweise bereitgestellt werden.

Der Bus 930 und das Netzwerk 990 stellen logische und physische Verbindungen dar, die sowohl Befehle als auch Datensignale übertragen. Verbindungen innerhalb des Computers 900 werden üblicherweise als Bus 930 bezeichnet, Verbindungen zwischen den Computern 900-902 werden als Netzwerk 990 bezeichnet. Die Einrichtungen 940 und 950 sind mit dem Computer 900 durch den Bus 930 (wie gezeigt) verbunden oder wahlweise über das Netzwerk 990 angeschlossen. Die Signale innerhalb des Computers 900 sind überwiegend elektrische Signale, wohingegen die Signale im Netzwerk elektrische, magnetische und optische Signale oder auch drahtlose Funksignale sein können.

Netzwerkumgebungen (wie Netzwerk 990) sind in Büros, unternehmensweiten Computernetzwerken, Intranets und im Internet (d.h. World Wide Web) üblich. Die physische Entfernung zwischen den Computern im Netzwerk ist ohne Bedeutung. Netzwerk 990 kann ein drahtloses oder ein verdrahtetes Netzwerk sein. Als mögliche Beispiele für Implementierungen des Netzwerks 990 seien hier angeführt: ein lokales Netzwerk (LAN), ein Wide Area Network (WAN), ein ISDN-Netz, eine Infrarotverbindung (IR), eine Funkverbindung wie beispielsweise das Universal Mobile Telecommunication System (UMTS) oder eine Satellitenverbindung.

Übertragungsprotokolle und Datenformate sind bekannt.

Beispiele dafür sind: TCP/IP (Transmission Control Protocol/Internet Protocol), HTTP (Hypertext Transfer Protocol), URL (Unique Resource Locator), HTML (Hypertext Markup Language), XML (Extensible Markup Language), WML (Wireless Application Markup Language) usw.

Schnittstellen zum Koppeln der einzelnen Komponenten sind ebenfalls bekannt. Zur Vereinfachung sind die Schnittstellen nicht dargestellt. Eine Schnittstelle kann beispielsweise eine serielle Schnittstelle, eine parallele Schnittstelle, ein Gameport, ein universeller serieller Bus (USB), ein internes oder externes Modem, ein Grafikadapter oder eine Soundkarte sein.

Computer und Programm sind eng verbunden. In der Beschreibung sind Wendungen wie "der Computer stellt zur Verfügung" und "das Programm stellt zur Verfügung" übliche Abkürzungen, die die programmgesteuerten Verfahrensschritte des Computers beschreiben.

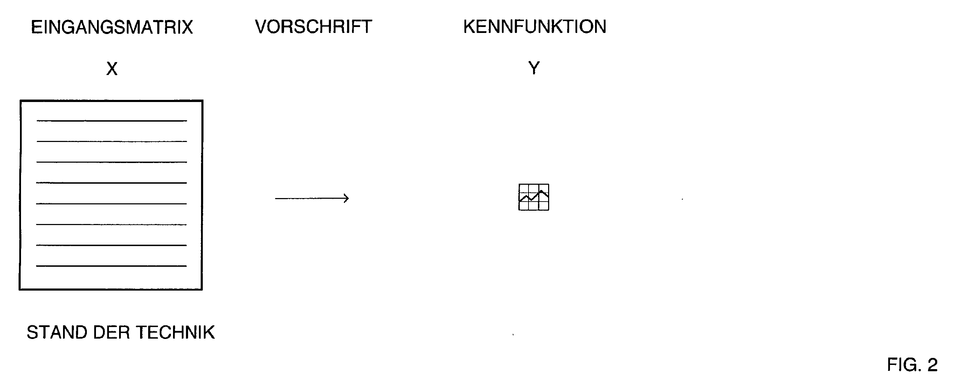

### Beschreibung der FIGS. 2-22

FIG. 2 zeigt das Bestimmen einer Kennfunktion Y aus einer Eingangsmatrix X gemäß dem Stand der Technik. Eine Vorschrift wird auf alle Datensätze (Zeilen) angewandt. Die nötigen Ressourcen reichen oft nicht aus, und die Bearbeitungszeit ist unerwünscht lang. Das ist besonders unvorteilhaft, wenn der Rechenaufwand nichtlinear zur Anzahl der Datensätze ansteigt (z.B. quadratisch oder exponential).

FIG. 3 zeigt ein vereinfachtes Ablaufdiagramm zum Bestimmen der Kennfunktion entsprechend der vorliegenden Erfindung.

Bearbeiten (Anreichern und Verdichten) und Berechnen wird schwerpunktmäßig dargestellt durch ein erstes Verfahren 401; die Verwendung des Schemas wird schwerpunktmäßig darstellt durch ein zweites Verfahren 402. Einige Verfahrensschritte werden in beiden Verfahren angewendet. Der Begriff "Klasse" wird verwendet als Synonym für "Klassifikator", "Klassifizierer" und "Kategorie".

Ein erstes Verfahren 401 zur Datenverarbeitung mit programmgesteuertem Prozessor 100/910 (vgl. FIG. 1) betrifft das Bestimmen einer Kennfunktion Y aus einer Matrix X₀ mit einer vorgegebenen Zahl Z₀ von Datensätzen DS mit klassifizierbaren Merkmalen M. Das Verfahren 401 ist gekennzeichnet durch das Ausführen eines Verfahrensschritts Bearbeiten 430 in den beiden Bearbeitungsarten (a) Anreichern 431 der Matrix mit Klassen K für die Merkmale M, wobei die Zahl der Datensätze DS erhalten bleibt, und (b) Verdichten 432 entsprechend den Klassen K unter Verringerung der Zahl der Datensätze DS; sowie durch das Ausführen eines Verfahrensschritts Berechnen 440 der Kennfunktion Y unter Berücksichtigung der Mehrzahl der Datensätze der bearbeiteten Matrix.

Bearbeiten 430 (Anreichern 431/Verdichten 432) und Berechnen 440 tragen zur Lösung der o.g. technischen Aufgaben ZEIT und RESSOURCE bei. Ressourcen werden optimal ausgenutzt. Trotz "großer" Matrix X₀ (z.B. Z₀ im Millionenbereich) kann die Kennfunktion Y berechnet werden. Die letztmalig verdichtete Matrix (d.h. Zwischenmatrix) enthält weniger Datensätze als die ursprüngliche Matrix X₀. Einzelheiten und weitere Vorteile werden im folgenden erläutert.

Ein zweites Verfahren 402 zur Datenverarbeitung mit programmgesteuertem Prozessor 100/910 betrifft das Bestimmen der Kennfunktion Y aus der Matrix X₀ mit der vorgegebenen Anzahl Z₀ von Datensätzen DS mit klassifizierbaren Merkmalen M und umfaßt Bearbeiten 430 der Matrix und Berechnen 440 der Kennfunktion Y unter Berücksichtigung der Mehrzahl der Datensätze der bearbeiteten Matrix. Bearbeiten 430 erfolgt durch Anreichern 431 der Matrix mit Klassen K für die Merkmale M (unter Beibehaltung der Zahl der DS), und Verdichten 432 entsprechend den Klassen K (unter Verringerung der Zahl der DS). Das Verfahren 402 ist gekennzeichnet durch Interpretieren 450 eines vorbestimmten Schemas 200, das die Reihenfolge der einzelnen Ausführungen von Anreichern 431 und Verdichten 432 sowie die Regeln für die jeweils einzelnen Ausführungen festlegt. Interpretieren 450 ist auch anwendbar auf Berechnen 440.

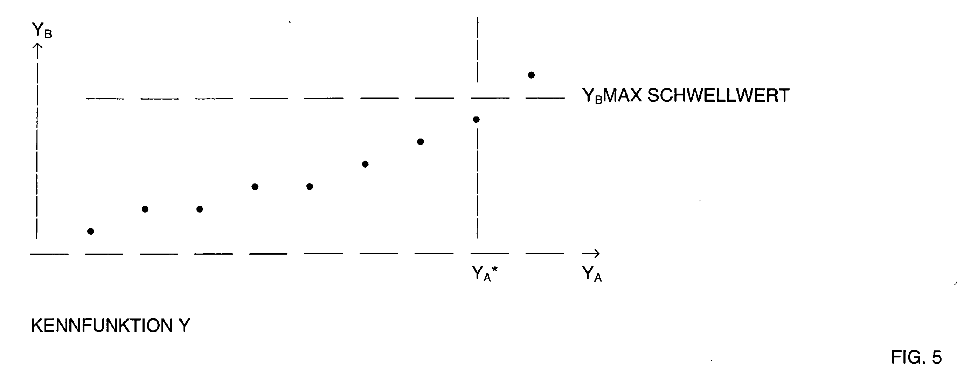

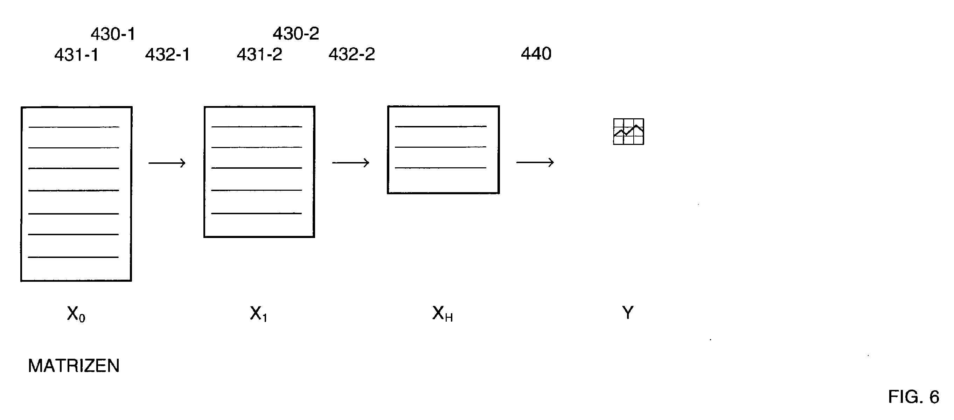

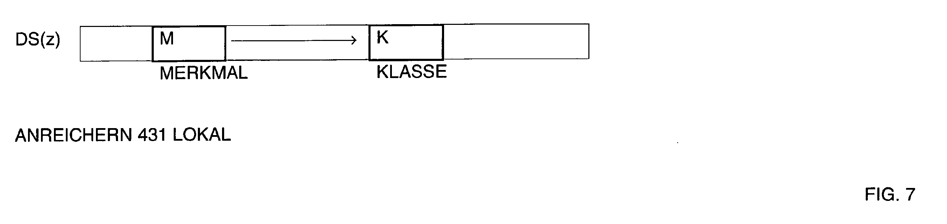

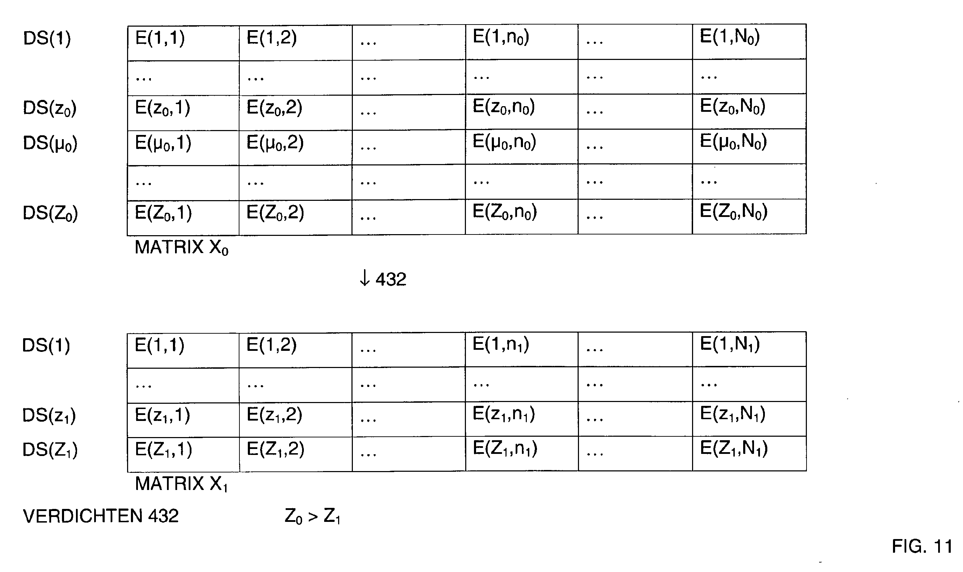

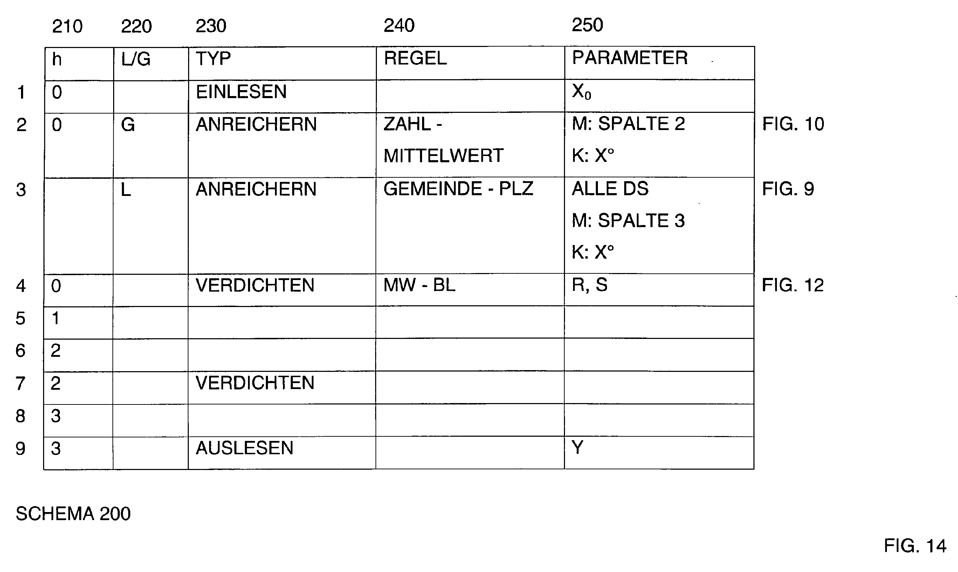

Neben den Blöcken für die Verfahrensschritte Bearbeiten 430, Berechnen 440 und Interpretieren 450 (nur 402) verwendet FIG. 3 auch symbolische Darstellungen: Matrix X₀ (FIG. 4); Kennfunktion Y (FIG. 5); Wiederholen 435 von Schritten (vgl. FIG. 6 mit Darstellung mehrerer Matrizen); Anreichern 431 (FIGS. 7-10); Verdichten 432 (FIGS. 11-13); sowie das Schema 200 (FIGS. 14-16).

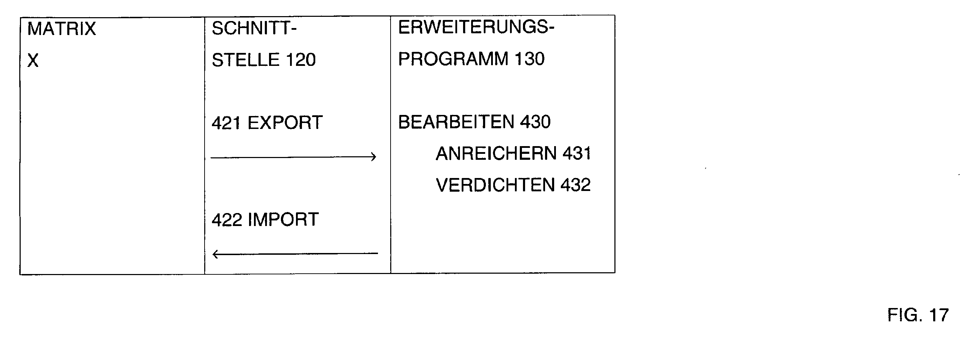

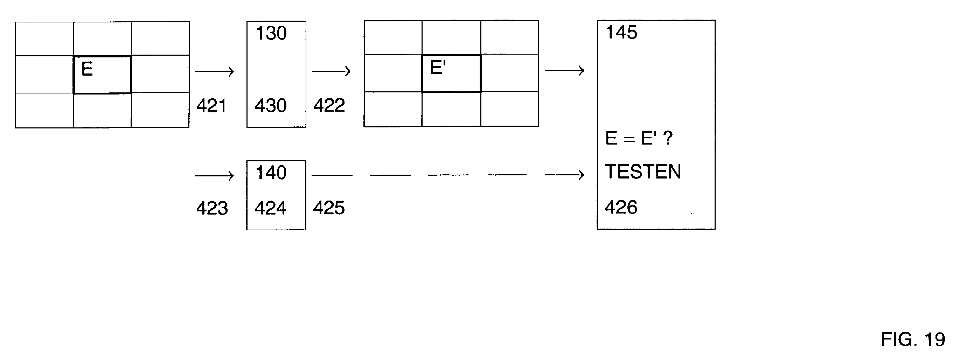

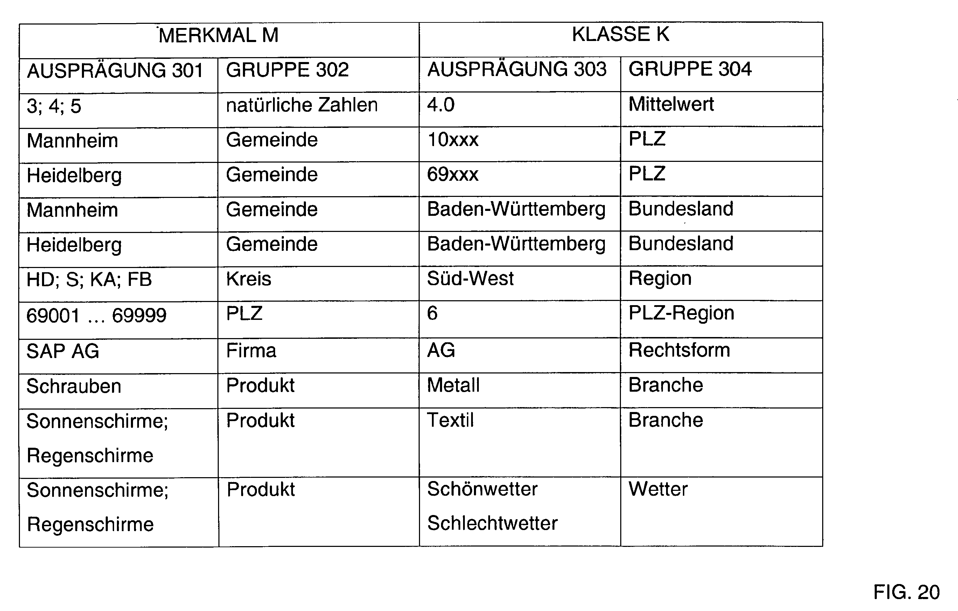

Bevorzugte Ausführungsformen und Anwendungsbeispiele, die auch zur Lösung der anderen Probleme beitragen, folgen als Erweiterungsprogramm/Schnittstelle (FIGS. 17-18); Testen (FIG. 19), Merkmale M, Klassen K und Regeln (FIGS. 20-22).

FIG. 4 zeigt die Matrix X₀ der Ordnung Null (Index 0, "Eingangsmatrix"). Datensätze DS werden in Klammern mit dem Zeilenindex z₀ bezeichnet; die Zahl der Datensätze (Zeilen) ist Z₀. Die Datensätze werden jeweils mit DS(1), DS(z₀), DS (Z₀) bezeichnet.

Jeder Datensatz DS hat bis zu N₀ Elemente E(z₀,n₀), die in Klammern mit Zeilenindex z₀ und Spaltenindex n₀ identifiziert werden. Die Elemente E haben die Funktion von Merkmalen M und von daraus abgeleiteten Klassen K (vgl. FIG. 2, M und K). Ein Element kann gleichzeitig beide Funktionen erfüllen; es ist auch möglich, daß ein Element erst als Merkmal M und dann als Klasse K auftritt. Wahlweise können beliebige Elemente als Untermatrizen oder als Pointer auf Tabellen, Speicherbereiche und dergleichen ausgeführt sein.

Die Ordnung ("Ebene") Null steht zunächst für das Vorhandensein aller Datensätze, die anfangs dem Computer zur Verfügung stehen (z.B. aus Datenbanktabelle).

FIG. 5 zeigt beispielhaft die Kennfunktion Y mit Wertepaaren der Mengen Y_{A} (Abszisse) und Y_{B} (Ordinate) sowie den Schwellwert Y_{B}MAX (Strichlinie). Es ist vorteilhaft, die berechnete Kennfunktion Y anzuzeigen (z.B. Bildschirm, Excel-Tabelle, Ausdruck, Bericht). Der Betrachter kann eine betriebswirtschaftliche Entscheidung treffen. Eine wichtige Kennzahl ist zum Beispiel Y_{A}*, die Abszisse des Schwellwertes.

Bei Anwendung der Erfindung in der Finanzwirtschaft stehen beispielsweise Y_{B} (Ordinate) für eine Wahrscheinlichkeit (Y_{B}MAX = 99%) und Y_{A} (Abszisse) für einen Verlust, der bei gegebener Wahrscheinlichkeit ausbleibt (Y_{A}* ein Zahlenwert in der Größenordnung von Mio. 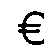 ).

Die Kennfunktion kann auf eine einzige Kennzahl (z.B. Y_{A}*) reduziert werden.

FIG. 6 zeigt das Bestimmen der Kennfunktion Y aus der Matrix X₀ (Ordnung Null, vgl. FIG. 4) über Zwischenmatrizen höherer Ordnung. Die Ordnungen der Zwischenmatrizen werden allgemein mit Index h gekennzeichnet. Index H steht für die höchste Ordnung.

Die Schritte Bearbeiten 430 und Berechnen 440 (vgl. FIG. 3) werden durch Pfeile dargestellt. Allgemein gilt: Eine Matrix Xₕ (h=0...H-1) wird bearbeitet 430 in eine Zwischenmatrix Xₕ₊₁; die Zwischenmatrix höchster Ordnung X_{H} dient zum Berechnen 440 der Kennfunktion Y.

Bearbeiten 430 der Matrizen X₁ bis X_{H} erfolgt in den Bearbeitungsarten Anreichern 431 und Verdichten 432. Berechnen 440 kann unter Zuhilfenahme einer weiteren Matrix erfolgen, so daß die Zwischenmatrix X_{H} mit der weiteren Matrix durch Matrizenoperationen verknüpft wird.

Durch Verdichten 432 wird die Ordnung der Matrix erhöht. Mit anderen Worte, die Ordnungszahl h bezeichnet die Zahl der ausgeführten Schritte Verdichten 432. Die Matrix X₀ der Ordnung Null ist unverdichtet, die Matrix X₁ erster Ordnung ist einmal verdichtet, usw.

Die Matrix X₀ der Ordnung Null wird angereichert 431-1 und anschließend zur Zwischenmatrix X₁ der Ordnung 1 verdichtet 432-1 (Bearbeiten 430-1). Die Zwischenmatrix X₁ der Ordnung 1 wird angereichert 431-2 und anschließend zur Zwischenmatrix X₂ der Ordnung 2 verdichtet 432-2 (Bearbeiten 430-2). Die Zwischenmatrix X_{H} (H=2) dient zum Berechnen 440 der Kennfunktion. Die Steuerung erfolgt mit Hilfe des Schemas 200 (vgl. FIGS. 3, 14).

Anreichern 431 und Verdichten 432 können gleichzeitig ausgeführt werden; zur Vereinfachung der Darstellung werden die Schritte jedoch einzeln betrachtet. Zur Vereinfachung der Darstellung verwendet die Beschreibung die Begriffe Bearbeiten 430, Anreichern 431 und Verdichten 432 nicht nur hinsichtlich kompletter Matrizen (wie X₁, X₂ usw.), sondern auch hinsichtlich einzelner Datensätze (wie DS(z), DS(µ), usw.).

FIGS. 7-8 zeigen in vereinfachter Darstellung die Ausprägungen LOKAL und GLOBAL des Schrittes Anreichern 431. Beim Anreichern 431 ist zumindest ein Datensatz DS(z) beteiligt. Es ist nicht notwendig, einen Datensatz vollständig zu bearbeiten (also alle N Elemente zu berücksichtigen). Elemente, die als Merkmale M oder Klasse K auftreten, sind durch fetten Rahmen gekennzeichnet. Pfeile von M zu K symbolisieren, daß die Klassen K aus den Merkmalen M abgeleitet werden.

Obwohl sich die Darstellung auf einzelne Elemente beschränkt, können mehrere Elemente als Merkmal M und Klasse K auftreten. Den Spaltenindizes der M und K innerhalb eines Datensatzes kommt keine Bedeutung zu. Die Pfeile können demnach nach links oder nach rechts gehen.

Nach dem Anreichern kann das Merkmal M aus dem Datensatz entfernt werden; die Klasse K kann eingefügt werden oder das Merkmal M überschreiben.

FIG. 7 zeigt Anreichern 431 in der Ausprägung LOKAL, bei der die Elemente innerhalb des gleichen Datensatzes DS(z) verbleiben. Mit anderen Worten, nur Merkmal M bestimmt die Klasse K. Andere Datensätze beeinflussen K nicht.

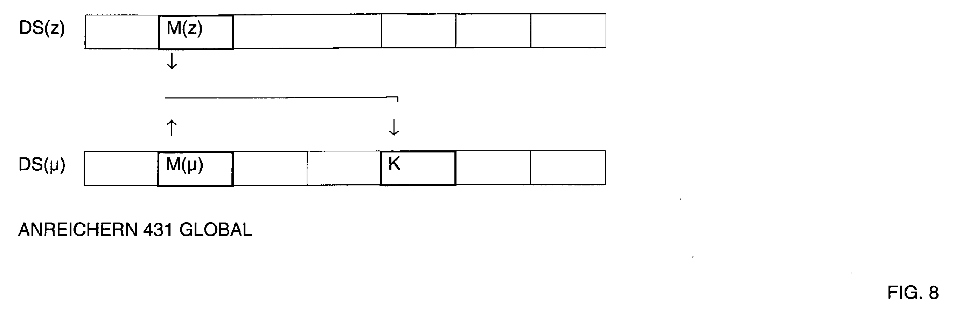

FIG. 8 zeigt Anreichern 431 in der Ausprägung GLOBAL, bei der Merkmale M(z) und M(µ) von mindestens zwei Datensätzen DS(z) bzw. DS(µ) verwendet werden. Die Klasse K kann (muß aber nicht) als Element eines der Datensätze (z.B. DS(µ)) gespeichert werden. Die Datensätze DS(z) und DS(µ) können benachbart sein (µ = z + 1, z - 1), müssen es aber nicht.

Es ist möglich, alle Datensätze DS(1)...DS(Z) einer Matrix X anzureichern. Dieser Fall wird mit dem Begriff GLOBAL ALLE beschrieben.

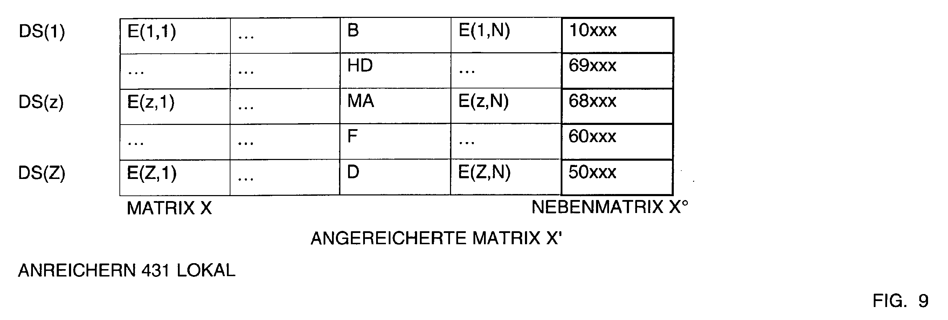

FIGS. 9-10 dienen der ergänzenden Erläuterung der Bearbeitungsart Anreichern 431 anhand von Beispielen. Die Ordnungs-Indizes sind hier ohne Bedeutung und werden hier nicht angegeben. Die Zahl Z der Datensätze (DS) in der Matrix ändert sich nicht. Anreichern 431 erfolgt nach vorbestimmten Regeln (vgl. FIGS. 20-22). Die Klassen K werden nach den Regeln aus den Merkmalen M abgeleitet. Die Klassen K werden entweder in die gleiche Matrix (Ursprungsmatrix) oder in eine Nebenmatrix geschrieben (angereicherte Matrix X' aus Ursprungsmatrix X und Nebenmatrix X°).

Anreichern 431 schließt nicht aus, daß auch Spalten gelöscht werden können. Der Fachmann ist dazu in der Lage, ohne daß es hier ausführlicherer Erläuterungen bedarf. Bedarfsweise werden Zwischenergebnisse gespeichert (z.B. in "log table"), so bei Berechnungen, die aus rechtlichen Gründen protokolliert werden.

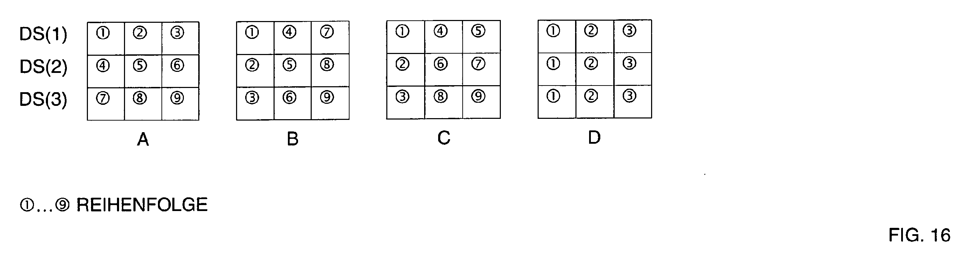

FIG. 9 zeigt Anreichern 431 in der Ausprägung LOKAL mit mehr Einzelheiten. Das Hinzufügen von Klassen erfolgt innerhalb jeden Datensatzes. Spalte 3 gibt Kfz-Zulassungskreise an (B Berlin, HD Heidelberg, MA Mannheim, F Frankfurt, D Düsseldorf), die Nebenmatrix (X°, fetter Rahmen) gibt dazugehörige Postleitzahlbereiche an (2 Ziffern festgelegt, 3 Ziffern offen). Die Regel (z.B. Kreis-PLZ) ist vorbestimmt. Da die Datensätze DS voneinander unabhängig sind, ist hier eine gleichzeitige Bearbeitung von mehreren DS vorteilhaft (Parallelverarbeitung, vgl. auch FIG. 16, Bild D).

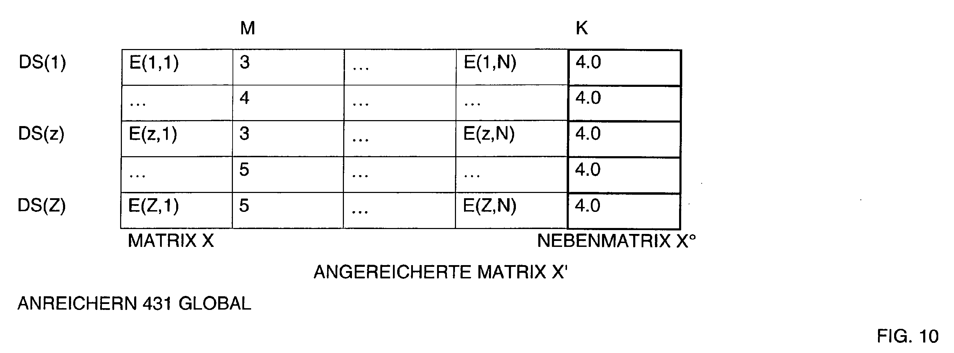

FIG. 10 zeigt Anreichern 431 in der Ausprägung GLOBAL mit mehr Einzelheiten. Angereichert wird die Matrix X hier beispielsweise durch das Hinzufügen einer Nebenmatrix (X°, fetter Rahmen), die in allen Datensätzen DS(1) bis DS(Z) den Mittelwert der Elemente E(z,2) enthält (Summe von E(z,2) von z = 1 bis z = Z, geteilt durch Z). Der Mittelwert bildet die Elemente der Nebenmatrix. Mit anderen Worten, die Merkmale M der Spalte 2 werden klassifiziert zur Klasse K "Mittelwert".

Kennzeichnend für globales Anreichern 431 ist, daß Elemente verschiedener Datensätze berücksichtigt werden können (z.B. aller DS). Weitere Beispiele für global berechnete Werte sind die Berechnung der folgenden Elemente: zahlenmäßig größtes Element E_{MAX}(z) innerhalb einer Spalte (z.B. E_{MAX}(2) = 5), zahlenmäßig kleinstes Element E_{MIN} (z) innerhalb einer Spalte (z.B. E_{MIN} (2) = 3), Standardabweichung innerhalb einer Spalte, und Median innerhalb einer Spalte.

Die Berücksichtigung aller Elemente einer Spalte ist nicht notwendig; die Berücksichtung nur einzelner, ausgewählter Elemente ist auch möglich.

Der Fachmann ist in der Lage, Anreichern 431 weiter zu definieren. Das gilt sowohl für das globale Anreichern als auch für das lokale Anreichern. Die genannten statistischen Berechnungen können ergänzt werden durch Berechnungen weiterer wirtschaftlicher Kennzahlen. Eine Berechnung ist nicht auf Zahlen beschränkt. Wie in Zusammenhang mit den Zulassungskreisen angedeutet, können Buchstaben oder andere Textangaben verarbeitet werden. Denkbar ist auch das Ergänzen von fehlenden Werten durch vorbestimmte Standardwerte (Default-Technik).

FIGS. 11-13 erläutern die Bearbeitungsart Verdichten 432. Die Beschreibung verwendet den Begriff Klasse K für jene Elemente, nach denen sich das Verdichten 432 richtet.

FIG. 11 zeigt Verdichten 432. Es ist vorteilhaft, Verdichten 432 erst auszuführen, wenn die Matrix vorher sortiert worden ist. Gezeigt ist das Verdichten der Matrix X₀ in die Matrix X₁. Die Zahl Z der Datensätze DS wird verringert (d.h. Z₁ < Z₀).

Im Beispiel werden die Datensätze DS(z₀) und DS(µ₀) in X₀ zusammengefaßt zum Datensatz DS(z₁) in X₁. Verdichten 432 erfolgt ebenfalls nach vorbestimmten Regeln, die im folgenden beispielhaft erläutert werden.

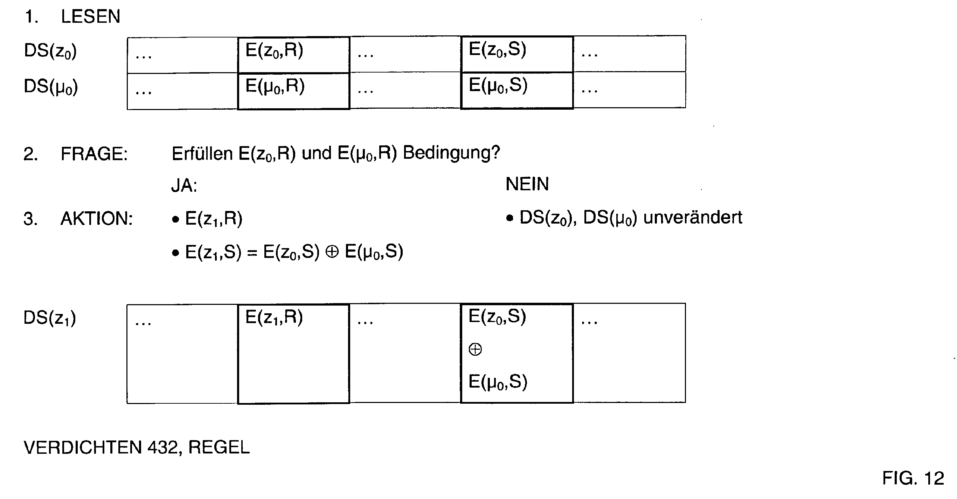

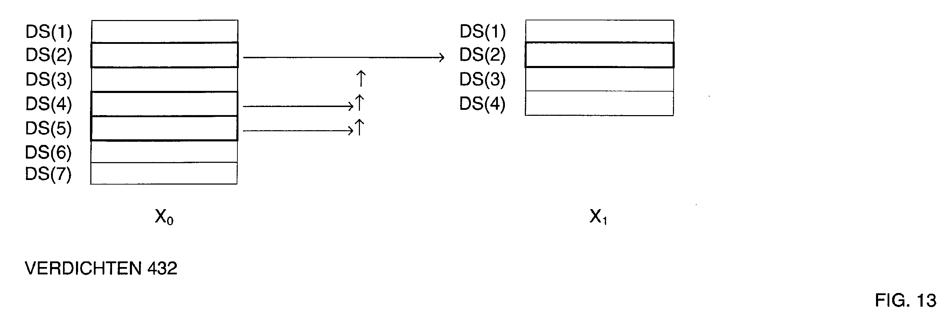

FIG. 12 zeigt Einzelheiten für eine Regel zum Verdichten 432. Betrachtet werden hier die beiden Spalten R und S der Matrix X₀.

Zunächst werden die Elemente eingelesen (LESEN). Es wird abgefragt, ob die Elemente E(z,R) und E(µ,R) eine vorherstimmte Bedingung erfüllen. Wenn ja, wird beispielsweise Spalte R in X₁ verändert zu E(z₁,R), und es werden die Elemente in Spalte S der X₀ zu einem Element der Spalte S der X₁ verknüpft (Symbol ⊕) E(z₁,S) = E(z₀,S) ⊕ E(µ₀,S).

Die Verknüpfung erfolgt beispielsweise durch

| | |
|---|---|
| • Addition | E(z₁,S) = E(z₀,S) + E(µ₀,S) |
| • Subtraktion | E(z₁,S) = E(z₀,S) - E(µ₀,S) |
| • Minimum | E(z₁,S) = MIN [E(z₀,S), E(µ₀,S)] |
| • Maximum | E(z₁,S) = MAX [E(z₀,S), E(µ₀,S)] |
| • Mittelwert | E(z₁,S) = 0.5 * [E(z₀,S), E(µ₀,S)] |

Falls die Bedingung nicht erfüllt ist, wird nicht verdichtet und die Datensätze der X₀ verbleiben unverändert.

Beispielsweise lautet die Regel "Mittelwert-Bundesland" wie folgt:
- Datensätze DS(z₀) und DS(µ₀) zu DS(z₁) zusammenfassen, wenn E(z₀,R) und E(µ₀,R) Gemeinden im gleichen Bundesland bezeichnen. E(z₀,R) = Mannheim und E(µ₀,R) = Heidelberg liegen beispielsweise in Baden-Württemberg und E(z₁,R) wird auf die Abkürzung "BW" gesetzt. Es entsteht damit ein Element (z.B. "BW"), das den Datensatz DS(z₁) neu definiert.
- Für die Elemente E(z₀,R) und E(µ₀,R) der Spalte S den arithmetischen Mittelwert bilden und in E(z₁,S) schreiben.

Zum Zwecke der Erläuterung ist die Regel grob vereinfacht. Entscheidend ist jedoch nicht die Komplexität, sondern die vorherige Definition der Regel.

Obwohl die Regeln allgemein nur hinsichtlich der beiden Spalten R und S und hinsichtlich der beiden Datensätze erläutert wurde, kann der Fachmann die Regel erweitern. Anregungen dazu sind in FIGS. 20-22 gegeben.

FIG. 13 zeigt Verdichten 432 angewendet auf mehrere Datensätze (DS(2), DS(4) und DS(5)) der Eingangsmatrix X₀, die zu einem Datensatz (DS(2)) einer Zwischenmatrix X₁ verdichtet werden (Z₀ > Z₁).

Verdichten 432 schließt nicht aus, daß auch Spalten gelöscht werden bzw. Verdichten nicht allein hinsichtlich der Zeilen (DS), sondern auch hinsichtlich der Spalten erfolgen kann. Bedarfsweise werden Zwischenergebnisse gespeichert. Der Fachmann ist dazu in der Lage, ohne daß es hier ausführlicherer Erläuterungen bedarf.

FIG. 14 zeigt das Schema 200 mit Einträgen für:
- 210: Ordnung h der Matrizen (z.B. 0, 1, 2, und 3) vor Ausführung der Schritte,
- 220: Ausprägung LOKAL/GLOBAL (für Anreichern 431),
- 230: Typ der Bearbeitungsschritte (z.B. Anreichern 431, Verdichten 432, sowie Einlesen und Auslesen der Daten),
- 240: Konkretisierung der Regeln (z.B. Angabe der Regel für einzelne Schritte, vgl. FIGS. 20-22),
- 250: Parameter (z.B. Angabe von Matrizen oder Spalten, mit denen die Bearbeitungsschritte ausgeführt werden sollen; Identifikation von M und K).

Die Einträge 210-250 sind technisch repräsentiert, zum Beispiel durch Programmpfade, Zahlenwerte, Variablen, oder die Identifikationen von Schnittstellen (vgl. FIG. 17).

Das Schema wird in der Reihenfolge der links angegebenen laufenden Nummern 1...9 ausgeführt. Zur Verdeutlichung sind rechts Zeichnungen angegeben. Mit jeder Ausführung des Schritts Verdichten wird die Ordnung erhöht.

Das Schema kann von einem Prozessor-Steuerprogramm (z.B. CPP 100) interpretiert werden - also sequentiell abgearbeitet werden(vgl. 450). Das Steuerprogramm veranlaßt das Ausführen der im Schema angegebenen Schritte 430, 440 (zur Laufzeit). Das Schema 200 ist unabhängig vom Steuerprogramm 100 des Prozessors 910 modifizierbar.

Das dargestellte Schema 200 stellt den Ablauf im allgemeinen dar. Einzelne Schritte (z.B. Verdichten 432) können in einzelnen Unter-Schemen präzisiert werden. Die Unter-Schemen können spezialisiert sein, zum Beispiel in Schemen für Anreichern 431, für Verdichten 432, für vorbestimmte Bearbeitungsalgorithmen, usw.

"Auslesen" in der letzten Schema-Zeile 9 steht symbolisch für das Fortschreiben der Matrix in eine Datenbank zur dauerhaften Speicherung der Daten.

Es ist vorteilhaft, bestimmte Schemen vorzufertigen, die vom Anwender (z.B. Finanzinstitut) konfiguriert werden. Vorteilhaft ist dabei die Möglichkeit, Schema 200 und Steuerprogramm (CPP 100) getrennt zu erstellen. Das trägt u.a. zur anfangs genannten Geheimhaltung von Betriebsabläufen des Anwenders bei.

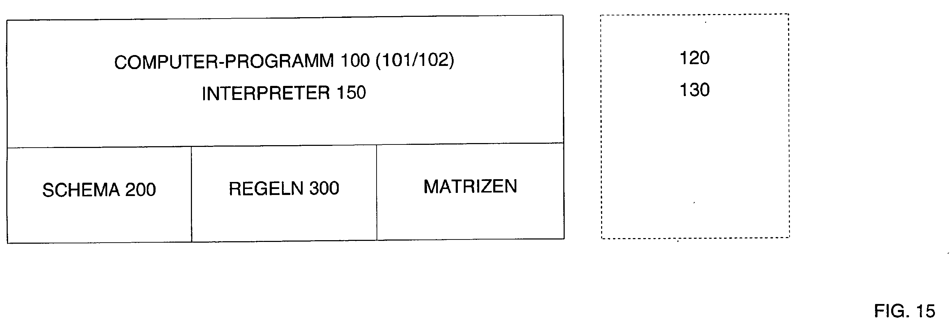

FIG. 15 zeigt das Computerprogramm 100 (mit Interpreter 150), das Schema 200, Regeln 300 und Matrizen X. Es ist vorteilhaft, diese Komponenten auf einem Computer (z.B. Computer 900) bereitzustellen.

Computerprogrammprodukt 100 (CPP) umfaßt die Programm-Code-Mittel zur Steuerung des Prozessors 910 (vgl. FIG. 1), der die Verfahren 401 und 402 ausführt. Unterschieden werden CPP 101 und CPP 102 für Verfahren 401 bzw. 402. Der Fachmann ist in der Lage, für jeden Verfahrensschritt den Programmcode zu erstellen. CPP 100 enthält den Interpreter 150 zum sequentiellen Abarbeiten des Schemas 200 (vgl. FIG. 16). Die Regeln 300 sind beispielsweise als Regelsammlung ("rule repository") implementiert.

Mit gestrichelten Linien sind vorteilhafte Erweiterungen des CPP 100 angedeutet (Schnittstellen 120, Programm 130), die in Zusammenhang mit FIGS. 17-18 näher erläutert werden.

FIG. 16 zeigt das Festlegen der Reihenfolge von Bearbeitungsschritten der Art Anreichern 431 anhand einer Beispielmatrix mit 3 Datensätzen. Die Elemente stehen jeweils für Merkmale M, die die Grundlage zum Anreichern 431 bilden. Die Kreisnummern bezeichneten die Bearbeitungs-Reihenfolge.

Das Anreichern 431 eines Datensatzes erfolgt innerhalb eines Zeitintervalls T. Jedes Intervall T wird bestimmt durch die eigentliche Ausführung und durch Lese- und Schreibvorgänge vom Speicher 920 zum Prozessor 910. Es ist davon auszugehen, daß auf jeweils komplette Datensätze zugegriffen wird (lesen und schreiben). Bei externem Bearbeiten 430, also beispielsweise der Verwendung der Schnittstelle 120 und des Erweiterungsprogramms 130 der FIG. 17-18, sollte die Anzahl der auszuführenden Lese- und Schreibvorgänge hinsichtlich der Geschwindigkeit optimiert werden.

Anreichern 431 erfolgt in Blöcken. Bilder A, B und C zeigen serielles Anreichern. Bild D zeigt paralleles Anreichern.

Bild A zeigt zeilenweises Anreichern 431 für beispielsweise den folgenden Ablauf: Lokales Anreichern, DS(1) lesen, Merkmal M aus Spalte 1 zur Klasse K in Spalte 2 anreichern, K in Spalte 2 zum M erklären, M aus Spalte 2 zum K in Spalte 3 anreichern, DS(1) zurückschreiben, DS(2) bearbeiten, DS(3) bearbeiten. Endergebnisse hängen von Zwischenergebnissen ab.

Bild B zeigt spaltenweises Anreichern mit mehrfachem Lesen und Schreiben der Datensätze, oft angewendet für globales Anreichern zum Beispiel durch Mittelwertbildung über alle Datensätze.

Bild C zeigt eine Kombination aus spalten- und zeilenweisem Anreichern. Ergebnisse der Spalte 1 können in der Zwischenzeit berücksichtigt werden, selbst wenn die Bearbeitung der Spalten 2 und 3 noch andauert.

Bild D zeigt die mögliche Parallelität bei lokalem Anreichern (vgl. Bild A). Beispielsweise erfolgt die folgende Abarbeitung: DS(1)(2)(3) gleichzeitig (aber unabhängig voneinander) lesen, die Merkmale M aus Spalte 1 zu den Klassen K in Spalte 2 anreichern, die K in Spalte 2 zu den M erklären, die M aus Spalte 2 zu den K in Spalte 3 anreichern, DS(1)(2)(3) gleichzeitig zurückschreiben.

Der Fachmann ist in der Lage, die jeweils zeitsparendste Option zu wählen und damit das Bearbeiten 430 der gesamten Matrix zu optimieren. Eine Implementierung beispielsweise durch Schleifenoperationen ist dem Fachmann bekannt. Das Schema 200 kann den Bedürfnissen des Anwenders angepaßt werden. Vorteilhaft ist automatische Auswahl der Reihenfolge beispielsweise durch Sortieren der Einträge in Schema 200.

FIG. 17 zeigt die Verwendung eines Erweiterungsprogramms 130 ("user exit"), das über eine Schnittstelle 120 mit der Matrix X kommuniziert und das Anreichern 431 ausführt. Verdichten 432 ist ebenfalls möglich.

Gezeigt sind eine Matrix (X₀ bis X_{H}), ein Erweiterungsprogramm 130 (z.B. für Anreichern 431 und Verdichten 432), sowie eine Schnittstelle 120, über die das Erweiterungsprogramm 130 auf die Matrix X zugreift. Die Schnittstelle 120 kann über XML ("Extensible Markup Language") definiert werden. Wahlweise dienen Schnittstelle 120 und Programm 130 auch zum Berechnen der Kennfunktion Y (nicht dargestellt, da analog zu 430).

Mit anderen Worten, Datensätze DS werden von der Schnittstelle 120 gelesen 421, vom Erweiterungsprogramm 130 bearbeitet 430, und von der Schnittstelle 120 wieder in die Matrix geschrieben 422.

Es ist vorteilhaft, die Implementierung des Programms 130 vollständig oder teilweise dem Anwender zu überlassen.

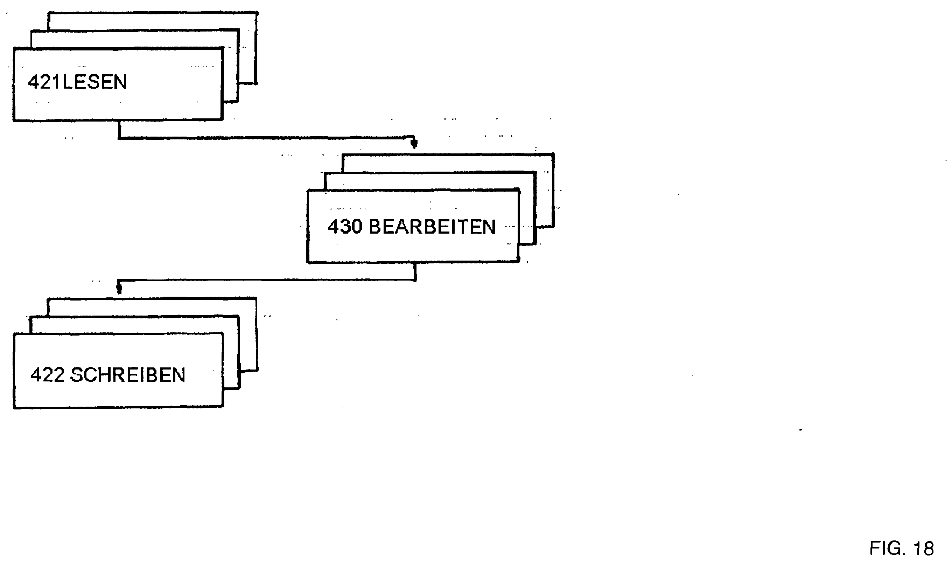

FIG. 18 zeigt ein Ablaufdiagram für die Operationen Lesen 421, Bearbeiten 430 (d.h. Anreichern 431/Verdichten 432) und Schreiben 422 bei Verwendung des Erweiterungsprogramms 130 der FIG. 17.

Lesen 421 und Schreiben 422 sind wahlweise Schritte der Verfahren 401 und 402. Schritte 421/422 werden vorteilhaft und ressourcensparend auf komplette Datensätze angewendet. Bei lokalem Anreichern ist das im wesentlichen gleichzeitige Lesen 421 bzw. Schreiben 422 von mehreren Datensätzen möglich (Mehrfachblöcke FIG. 18, vgl. auch FIG. 16).

FIG. 19 zeigt das wahlweise Testen 426 eines Matrixelementes E auf Veränderung im Erweiterungsprogramm 130. Dargestellt sind eine Matrix mit Element E (vor Bearbeiten 430), Lesen 421 in Erweiterungsprogramm 130 (vgl. FIG. 17-18), Bearbeiten 430 durch das Programm 130, Schreiben 422 in die Matrix als Element E', Lesen 423 in einen Zwischenspeicher 140 (vor Bearbeiten 430), Zwischenspeichern 424 (während Bearbeiten 430), Schreiben 425 in einen Tester 145, sowie Testen 426 auf Gleichheit der Elemente E und E'. Testen 426 ist besonders vorteilhaft, wenn das Erweiterungsprogramm 130 vom Anwender implementiert wird.

Gleichheit ist im weitesten Sinne zu verstehen, also auch Testen 426 auf Datenkonsistenz nach vorbestimmten Kriterien. Testen 426 kann auf mehrere Elemente erweitert werden. Testen 426 ist besonders vorteilhaft, falls die Matrix X₁ während des Bearbeitens 430 modifiziert wird.

FIGS. 20-22 legen den Schwerpunkt auf Merkmale M, Klassen K und Regeln. Erläuterungen zu den Regeln beziehen sich auf Anreichern 431; der Fachmann kann sie jedoch auch zum Verdichten 432 verwenden (vgl. Regel "Mittelwert-Bundesland" der FIG. 12), ohne daß es hier näherer Ausführungen bedarf. Wie erwähnt, Merkmale M und Klassen K können beispielsweise Zahlen, Texte, Kurzwörter, Datenbankzeiger ("pointer"), Hauptspeicherzeiger und Tabellen sein.

FIG. 20 zeigt eine Tabelle mit beispielhaften Merkmalen M und Klassen K, jeweils in Ausprägung 301/303 und Gruppe 302/304. Die Ausprägungen 301/303 stehen jeweils in den Elementen E(z,n) der Matrizen. Verschiedene Ausprägungen sind durch Semikolon voneinander getrennt. Die Gruppen 302/304 betreffen Gemeinsamkeiten innerhalb von Spalten. Spaltenüberschriften sind vorteilhaft; die Gruppen 302/304 müssen aber nicht unbedingt angegeben werden bzw. in der Matrix stehen.

Die Zahlen-Beispiele beziehen sich auf FIG. 10. Die Merkmale M (Elemente der Spalte 3) stehen dort als natürliche Zahlen (Gruppe 302) in den möglichen Ausprägungen 301 "3", "4" und "5". Die daraus abgeleiteten Klassen K (Elemente der X°, hier Mittelwert) stehen dort als reelle Zahlen (Gruppe 304) in der beispielhaften Ausprägung "4.0".

Weitere Beispiele beziehen sich auf FIG. 9. Die Städte Mannheim und Heidelberg gehören beide zur Gruppe der Gemeinden; beim Anreichern 431 zur Klasse Postleitzahl (Gruppe 304) sind dessen Ausprägungen 303 verschieden; beim Anreichern 431 zur Klasse Bundesland (Gruppe 304) sind dessen Ausprägungen 303 gleich (Baden-Württemberg). Die Anwendung unterschiedlicher Regeln auf gleiche Merkmale ist vor allem wichtig für betriebswirtschaftliche Anwendungen.

Es ist theoretisch denkbar, zum Anreichern 431 für jede Ausprägung 301 eines Merkmals M eine passende Ausprägung 303 der Klasse K festzulegen. Praktikabler sind Regeln, die sich auf Gruppen beziehen (im folgenden erläutert).

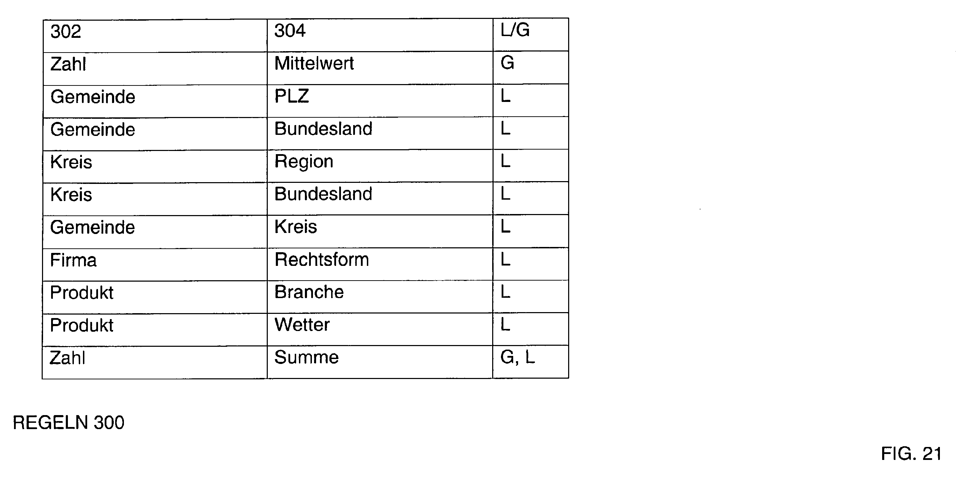

FIG. 21 zeigt eine Tabelle für Regeln. Eine Regel ist bestimmt jeweils für die Kombination einer Gruppe 302 von Merkmalen M mit einer Gruppe 304 von Klassen K. Solche Kombinationen sind beispielsweise Zahl/Mittelwert; Gemeinde/PLZ; Gemeinde/Bundesland; Kreis/Region usw. Die Kombinationen sind vorteilhaft auch im Schema 200 (vgl. FIG. 14) angegeben und eindeutig über die Gruppen 302/304 identifiziert.

Der Fachmann ist in der Lage, die Regeln zu implementieren. Bei Verwendung des Erweiterungsprogramms 130 (vgl. FIGS. 17-18) sind Regeln beispielsweise in externen Datenbanken hinterlegt (Repository, z.B. PLZ-Verzeichnis).

Die Regeln können eingeteilt werden in Regeln, die vom Hersteller der Software vordefiniert sind (z.B. Zahl-Mittelwert) und Regeln, die vom Anwender definiert werden (z.B. Produkt-Wetter). Bevorzugte Ausprägungen Global (G) bzw. Lokal (L) sind in der rechten Spalte angegeben.

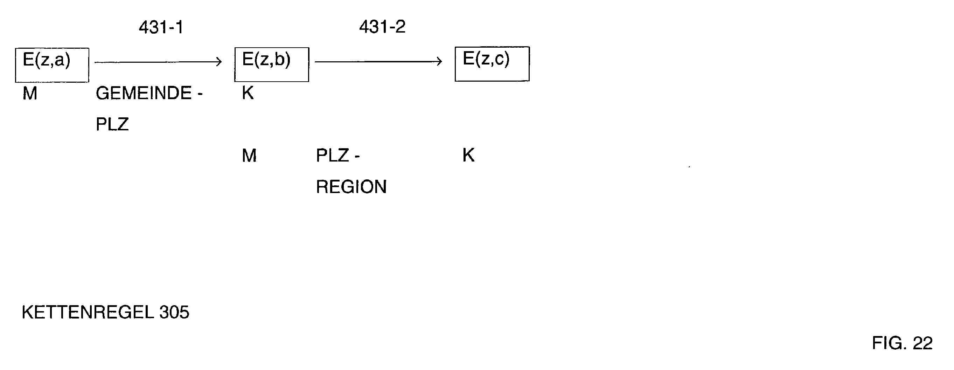

FIG. 22 zeigt Anreichern 431 in mehreren Schritten (-1, -2) unter Verwendung einer Kettenregel 305. Angegeben beispielhaft für lokales Anreichern 431 von Gemeinde zu PLZ-Region, werden nacheinander zwei verschiedene Regeln angewendet. Zunächst wird das Merkmal M der Gruppe 302 "Gemeinde" (E(z,a)) unter Anwendung der Regel "Gemeinde-PLZ" zur Klasse K (E(z,b)) der Gruppe 304 PLZ angereichert 431-1. Anschließend wird K zu M (E(z,b)); das Merkmal M der Gruppe 302 "PLZ" wird mit Regel "PLZ-Region" zur Klasse der Gruppe 304 angereichert 431-2 (z.B. "Heidelberg" zu "69xxx" zu "6", E(z,a)).

### Weitere Aspekte

Die im folgenden beschriebenen Aspekte der Erfindung sind wahlweise. Sie können bei Bedarf implementiert werden, sind aber nicht notwendig. Zur Vereinfachung der Beschreibung wird in diesem Abschnitt auf Begriffe wie "beispielsweise", "wahlweise" usw. sowie auf Modalverben (z.B. "können") weitgehend verzichtet.

Das Berechnen 440 der Kennfunktion Y erfolgt in der Bearbeitungsart Anreichern 432. Klassen K, die durch Anreichern 431 ermittelt wurden, sind Grundlage für die Kennfunktion Y.

Beim Anreichern 431 werden Datensätze DS ergänzt, indem Klassifikationen, die implizit im Datensatz vorhanden ist (als klassifizierbare Merkmale M), explizit in die Datensätze geschrieben werden (als Klassen K). Anreichern 431 ist gerichtet von Merkmal M auf Klasse K.

Anreichern 431 wurde erläutert für Fälle, in denen ein Merkmal M zu einer Klasse K führt. Die Regeln können erweitert werden für mehrere Merkmale M auf eine Klasse K (vgl. FIG. 10). Die Regeln 300 können jeweils angewendet werden auf mindestens einen ersten Datensatz DS(z) und einen zweiten Datensatz DS(µ), wobei Merkmale M(z) und M(µ) aus beiden Datensätzen eine Klasse K bestimmen (vgl. FIG. 8, globales Anreichern).

Als Beispiele für die Verwendung mehrerer Merkmale seien an dieser Stelle stellvertretend genannt: Korrelation, Median, Standardabweichung, Verteilungen (z.B. Gamma), Währungsumrechnungen, Wahrscheinlichkeiten (binominal, Poisson).

Die Klasse K wird in mindestens einen der beiden Datensätze übernommen (vgl. FIG. 8, dort in DS(µ)).

Bei unterschiedlichen Merkmalen wird eine dominierende Klasse gewählt, der einem der beiden Merkmale entspricht. Beispielsweise hat der Datensatz DS(z) ein Merkmal M "Textil" (der Gruppe 302 "Branche"), und der Datensatz DS(µ) hat ein unterschiedliches Merkmal M "Metall" (der gleichen Gruppe 302 "Branche"). Die anzuwendende Regel legt "Metall" als dominierende Klasse K fest.

Alternativ wird bei unterschiedlichen Merkmalen eine Klasse gewählt, der einem der beiden Merkmale übergeordnet ist. Beispielsweise hat der Datensatz DS(z) ein Merkmal M "Textil" (der Gruppe 302 "Branche"), und der Datensatz DS(µ) hat ein unterschiedliches Merkmal M "Metall" (gleichen Gruppe 302 "Branche"). Die anzuwendende Regel legt "Industrie" als übergeordnete Klasse K fest.

Bei Anreichern nach "GLOBAL ALLE" werden die Regeln 300 jeweils auf alle Datensätze angewendet, so daß Merkmale aus allen Datensätzen eine Klasse K bestimmen (vgl. FIG. 10).

Der Verfahrensschritt Bearbeiten 430 wird wiederholt ausgeführt (vgl. Linie 435 in FIG. 3) und zwar so, daß der Verfahrensschritt Berechnen 440 der Kennfunktion auf die letztmalig durch Verdichten 432 bearbeitete Matrix X ausgeführt wird. Berechnen 440 wird demnach einmalig ausgeführt. Das Bearbeiten 430 (als Verdichten 432) erfolgt bis zu einer vorbestimmten Zahl H Ausführungen (vgl. FIG. 6, H = 2).

Das Ausführen des Verfahrensschritts Bearbeiten 440 erfolgt in Kombination der Bearbeitungsarten Anreichern 431 und Verdichten 432. Mit anderen Worten, wenn verdichtet wird, erfolgt gleichzeitig ein Anreichern.

Merkmale M selbst können ausreichend klassifiziert sein (z.B. Bundesländer), so daß Verdichten 432 ohne Anreichern 431 auskommt. Mit anderen Worten, vor dem Verdichten 432 erfolgt ein virtuelles Anreichern 431 (ohne Datenmodifikation), bei dem Merkmale M als Klassen K unverändert übernommen werden. Die Metapher der Virtualität ist hilfreich für das Verständnis.

Beim Verdichten 432 werden Regeln 300 wie beim Anreichern 431 angewendet werden, bzw. bestehende Regeln werden modifiziert angewendet. Es können auch neue Regeln speziell für das Verdichten 432 definiert werden.

Beim Anreichern 431 und Verdichten 431 werden korrelierende Ausprägungen 301/302 von Merkmalen M und Klassen K berücksichtigt. Unter Bezugnahme auf FIG. 20 werden die Merkmale M "Sonnenschirme" und "Regenschirme" (Ausprägung 301) betrachtet. Anreichern 431 mit der Regel "Produkt-Wetter" führt zu einer Klassifikation in die abstrahierten Klassen K (Kategorien, Ausprägung 303) "Schönwetter" und "Schlechtwetter". Diese Klassen K werden in den Datensätzen DS(z) bzw. Datensatz DS(µ) gespeichert. Bezüglich der Gewinne verschiedener Schirmproduzenten sind diese Klassen gegensätzlich. Beim Verdichten 432 (Regel Wetter-Gewinn) wird die Gegenläufigkeit beachtet. Der Gesamtgewinn beider ist nicht die betragsmäßige Summe beider möglicher Gewinne, sondern eine vorzeichenrichtige Summe. Bei Schönwetter hat der Produzent von Sonnenschirmen einen Gewinnvorteil zu Lasten des Produzenten von Regenschirmen. Bei Schlechtwetter ist die Situation genau umgekehrt. Gewinne mit Regenschirmen gehen zu Lasten der Sonnenschirme. Mit anderen Worten, eine Daten-Korrelation kann berücksichtigt werden.

Bearbeiten 430 und Berechnen 440 erfolgt an Matrizen, die im Hauptspeicher oder in einer Datenbank implementiert sind.

Vor dem Abarbeiten 450 (Interpretieren) des Schemas 200 erfolgt eine Prüfung auf Sequenzen von Bearbeitungsschritten der Art Anreichern 432, bei denen Anreichern innerhalb der Datensätze erfolgt, so daß die Bearbeitungsschritte parallel ausgeführt werden (vgl. FIG. 16, Bild D).

Nach dem Schritt Bearbeiten 430 wird der betreffende Datensatz gekennzeichnet, im einfachsten Fall durch das Setzen eines Bits. Möglich ist aber auch das Anbringen eines Zeitstempels. Kennzeichnen erlaubt bei späteren Modifikation der Matrix X₀ eine Neuberechnung der Kennfunktion Y unter Berücksichtigung der geänderten Datensätze ohne vollständige Wiederholung der Berechnungen für die gesamte Matrix. Die Aufgabe ÄNDERN wird gelöst.

Berechnen 440 umfaßt nicht nur die Mehrzahl der Datensätze, sondern alle Datensätze (d.h. DS(1) bis DS(Z_{H})).

Verdichten 432 von Datensätzen erfolgt aus einer ersten Matrix und aus einer zweiten Matrix. Die beiden Matrizen haben gleiche Ordnung h, da an ihnen ein Verdichten 432 in gleicher Zahl durchgeführt wurde.

Verfahren 401 und 402 werden durch einen Computer 900 ausgeführt, der sowohl Steuerprogramm (CPP 100) als auch die Matrizen im Hauptspeicher verwaltet. Der Hauptspeicher ist beispielsweise ein 2,5 Gigabyte RAM-Speicher. Prozessor 910, -Speicher 920 und Bus arbeiten mit üblicher 64-Bit-Adressierung.

Computersystem 999 (vgl. FIG. 1) dient zum Ausführen der Verfahren 401/402. Programmträger 970 hat ein computerlesbares Medium, auf dem computerlesbare Programmcodemittel hinterlegt sind, die zur Ausführung der Verfahren 401/402 in den angegebenen Ausführungen dienen.

Computerprogrammprodukt (CPP) 101/102) hat Programminstruktionen, die einen Prozessor 910 (vgl. FIG. 1) dazu veranlassen, die Verfahrensschritte der Verfahren 401/402 auszuführen.

### Finanzanwendung

Anwendungen der vorliegenden Erfindung liegen vor allem in der Bearbeitung von Finanzdaten, wie beispielsweise zur Berechnung von Ausfallrisikos (z.B. Adreßrisiko, Kontrahentenrisiko, Emittentenrisiko) und Aktiv-Passiv-Steuerung ("asset liability management"). Das Implementieren von Finanz-Standard-Berechnungen ist ebenfalls möglich (z.B. Ableiten, Berechnen einer Exposure, Konditionieren).

Ziel der Berechnung bei der Anwendung Adreßrisiko ist die Identifizierung von Risiken. Die Kennfunktion Y entspricht dann der Wahrscheinlichkeit eines Risiko-Ereignisses (vgl. FIG. 5). Die Kreditrisiken werden schnell, hinreichend genau, ressourcensparend, bankintern und flexibel berechnet (vgl. Aufgaben ZEIT, RESSOURCEN, SCHNITTSTELLEN, REIHENFOLGE). Der Anwender (z.B. eine Bank oder Versicherung) kann eigene Regeln festlegen und diese im Erweiterungsprogramm 130 ausführen.

Die Matrix X₀ wird beispielsweise gespeist aus folgenden Daten: Geschäftspartnerdaten (d.h. Daten über die Bankkunden), und Vertragsdaten (d.h., Einzelheiten von Verträgen zwischen Bank und Kunden). Jeder Datensatz ist die technische Repräsentation der Merkmale eines Adreßrisikoträgers (z.B. eines Geschäftspartners). Zum Beispiel für Partner in DS(1) mit folgenden Elementen: E(1,1): Kunde "ALPHA" (Name), E(1,2): "Kreditvertrag" (Vertragsart), E(1,3): "1000 Euro" (Betrag), E(1,4): "Tilgung bis 31. Dezember 2002" (Ablaufdatum), "in der Stadt HD" (Ort), "Restschuldversicherung abgeschlossen" (Versicherung). In Klammern sind die Gruppen 302/304 angegeben (vgl. FIG. 19).

Bearbeiten 430 und vor allem Berechnen 440 richten sich nach einem von Anwender vorgegebenen Portfolio-Modell, das in Schema 200 eingeht.

Mit anderen Worten, die Verfahren 401 und 402 werden angewendet im Finanzbereich. Es wird ein solches Schema verwendet, das die Kennfunktion Y als Wahrscheinlichkeit Y_{B} eines finanziellen Verlustes Y_{A} mit vorgegebener Größenordnung beschreibt.

Allgemein beschrieben geht es um die Anwendung der Verfahren 401 und 402 in betriebswirtschaftlichen Anwendungen, wobei unter den Merkmalen und Klassen solche sind, die der folgenden Gruppe angehören: Bonität, Branche, Bundesland, Ergebnis, Firma, Gemeinde, Gesellschaftsform (AG, GmbH, KG, usw.), Kapital, Kosten, Kreditart, Kreis, Produkt, Postleitzahl (PLZ), Region, Risiko, Verlust, usw.

### Bezugszeichen

- -1, -2: Angabe von Wiederholungen
- 100: Computerprogrammprodukt (CPP)
- 101: CPP für Verfahren 401
- 102: CPP für Verfahren 402
- 120: Schnittstelle
- 130: Erweiterungsprogramm
- 140: Zwischenspeicher
- 145: Tester
- 150: Interpreter
- 200: Schema
- 210-240: Einträge in Schema
- 300: Regeln
- 301, 303: Ausprägung von M und K
- 302, 304: Gruppe von M und K
- 305: Kettenregel
- 401: erstes Verfahren
- 402: zweites Verfahren
- 421 423: Lesen
- 422 425: Schreiben
- 424: Zwischenspeichern
- 426: Testen
- 430: Bearbeiten
- 430 440 450: Verfahrensschritte
- 431: Anreichern
- 432: Verdichten
- 435: Wiederholung
- 440: Berechnen
- 450: Interpretieren
- 900 901 902: Computer
- 910: Prozessor
- 920: Speicher
- 930: Bus
- 940: Eingabeeinrichtung
- 950: Ausgabeeinrichtung
- 960: Benutzerschnittstelle
- 970: Programmträger
- 980 981 982: Signal
- 990: Netzwerk
- 999: Computersystem
- DS: Datensatz
- E: Element einer Matrix
- H: Ordnung der letzten Zwischenmatrix
- K: Klasse
- M: Merkmal
- N: Zahl der Elemente in DS
- n a b c: Spaltenindex
- R: Spaltenindex (bei Verdichten)
- S: Spaltenindex (bei Verdichten)
- X: Matrix, allgemein
- X': angereicherte Matrix
- X°: Nebenmatrix
- X₀: Eingangsmatrix (Originaldaten)
- X₁ X₂ X_{H}: Zwischenmatrix
- Y: Kennfunktion
- Y_{A} Y_{B} Y_{B}MAX: Zahlenwerte der Kennfunktion
- Y_{A}*: Kennzahl
- z µ: Zeilenindex
- Z Z₀ Z₁: Zahl der Datensätze (Zeilen)

### Literatur

US-Patentschrift 5,721,910
JP 10-222488
www.bw-bank.de/bwbank/pdf00/glossar00.pdf

## Patentansprüche

1. Verfahren (401) zur Datenverarbeitung mit programmgesteuertem Prozessor (100/910), zum Bestimmen einer Kennfunktion (Y) aus einer Matrix (X₀) mit einer vorgegebenen Zahl (Z₀) von Datensätzen (DS) mit klassifizierbaren Merkmalen (M), das Verfahren **gekennzeichnet durch** Ausführen eines Verfahrensschritts Bearbeiten (430) in den beiden Bearbeitungsarten Anreichern (431) der Matrix mit Klassen (K) für die Merkmale (M), wobei die Zahl der Datensätze (DS) erhalten bleibt, und Verdichten (432), entsprechend den Klassen (K) unter Verringerung der Zahl der Datensätze (DS); sowie Ausführen eines Verfahrensschritts Berechnen (440) der Kennfunktion (Y) unter Berücksichtigung der Mehrzahl der Datensätze (DS) der bearbeiteten Matrix (X₁).

2. Verfahren (401) gemäß Anspruch 1, wobei das Berechnen (440) der Kennfunktion (Y) in der Bearbeitungsart Anreichern (432) erfolgt.

3. Verfahren (401) gemäß Anspruch 1, wobei das Berechnen (440) der Kennfunktion (Y) unter Zuhilfenahme einer weiteren Matrix erfolgt, die mit der bearbeiteten Matrix (X₁) verknüpft wird.

4. Verfahren (401) gemäß Anspruch 1, wobei beim Anreichern (431) die Klassen (K) nach vorbestimmten Regeln (300) aus den Merkmalen (M) abgeleitet werden.

5. Verfahren (401) gemäß Anspruch 4, wobei die Regeln (300) das Ergänzen durch vorbestimmte Standardwerte vorsehen.

6. Verfahren (401) gemäß Anspruch 4, wobei die Regeln (300) jeweils angewendet werden auf einen Datensatz (DS), so daß Merkmal (M) und Klasse (K) in diesem einen Datensatz (DS) verbleiben.

7. Verfahren (401) gemäß Anspruch 6, wobei die Klasse (K) das Merkmal (M) überschreibt.

8. Verfahren (401) gemäß Anspruch 4, wobei die Regeln (300) jeweils angewendet werden auf mindestens einen ersten Datensatz (DS(z)) und einen zweiten Datensatz (DS(µ)), wobei Merkmale (M(z), M(µ)) aus beiden Datensätzen eine Klasse (K) bestimmen.

9. Verfahren (401) gemäß Anspruch 8, wobei die Klasse (K) in mindestens einen der beiden Datensätze (DS(z), DS(µ)) übernommen wird.

10. Verfahren (401) gemäß Anspruch 9, wobei bei unterschiedlichen Merkmalen (M(z), M(µ)) eine dominierende Klasse (K) gewählt wird, der einem der beiden Merkmale entspricht.

11. Verfahren (401) gemäß Anspruch 9, wobei bei unterschiedlichen Merkmalen eine Klasse (K) gewählt wird, der beide Merkmale (M(z), M, (µ)) übergeordnet ist.

12. Verfahren (401) gemäß Anspruch 4, wobei die Regeln (300) jeweils angewendet werden auf alle Datensätze, so daß Merkmale ((M(1)...M(Z)) aus allen Datensätzen (DS(1)...DS(Z)) eine Klasse (K) bestimmen.

13. Verfahren (401) gemäß Anspruch 4, wobei beim Anreichern (431) eine Regel (300) jeweils für die Kombination einer Merkmalsgruppe (302) mit einer Klassengruppe (304) angewendet wird.

14. Verfahren (401) gemäß Anspruch 4, wobei eine Kettenregel (305) angewendet wird.

15. Verfahren (401) gemäß Anspruch 1, wobei einzelne Ausführungen des Verfahrensschritts Bearbeiten (430) in der Bearbeitungsart Anreichern (431) so ausgeführt werden, daß Elemente eines Datensatzes innerhalb des gleichen Datensatzes verbleiben.

16. Verfahren (401) gemäß Anspruch 1, wobei der Verfahrensschritt Bearbeiten (430) wiederholt (435) ausgeführt wird.

17. Verfahren (401) gemäß Anspruch 16, wobei der Verfahrensschritt Berechnen (440) der Kennfunktion (Y) mit der letztmalig durch Verdichten (432) bearbeiteten Matrix (X_{H}) ausgeführt wird.

18. Verfahren (401) gemäß Anspruch 16, wobei das Bearbeiten (430) in der Bearbeitungsart Verdichten (432) bis zu einer vorbestimmten Zahl (H) Ausführungen durchgeführt wird.

19. Verfahren (401) gemäß Anspruch 1, wobei das Ausführen des Verfahrensschritts Bearbeiten (440) in Kombination der Bearbeitungsarten Anreichern (431) und Verdichten (432) erfolgt.

20. Verfahren (401) gemäß Anspruch 1, wobei vor dem Verdichten (432) ein Anreichern (431) erfolgt, bei dem Merkmale (M) als Klassen (K) unverändert übernommen werden.

21. Verfahren (401) gemäß Anspruch 1, wobei beim Verdichten (432) Regeln (300) wie beim Anreichern (431) angewendet werden.

22. Verfahren (401) gemäß Anspruch 1, wobei beim Anreichern (431) und Verdichten (431), korrelierende Ausprägungen (301/302) von Merkmalen (M) und Klassen (K) berücksichtigt werden.

23. Verfahren (401) gemäß Anspruch 1, wobei Bearbeiten (430) und Berechnen (440) an Matrizen erfolgt, die im Hauptspeicher implementiert sind.

24. Verfahren (401) gemäß Anspruch 1, wobei die Steuerung des programmgesteuerten Prozessors nach einem vorbestimmten Schema (200) erfolgt.

25. Verfahren (401) gemäß Anspruch 24, wobei das vorbestimmte Schema (200) unabhängig von einem Interpreter (150) modifizierbar ist.

26. Verfahren (401) gemäß Anspruch 24, wobei die Steuerung des Prozessors (910) durch sequentielles Abarbeiten (450) des Schemas (200) erfolgt.

27. Verfahren (401) gemäß Anspruch 24, wobei das Schema (200) einzelne Schritte in Unter-Schemen präzisiert.

28. Verfahren (401) gemäß Anspruch 27, wobei die Unter-Schemen spezialisiert sind auf Anreichern (431) und für Verdichten (432).

29. Verfahren (401) gemäß Anspruch 24, wobei vor dem Abarbeiten des Schemas (200) eine Prüfung auf Sequenzen von Bearbeitungsschritten der Art Anreichern (431) erfolgt, bei denen Anreichern (431) innerhalb der Datensätze erfolgt, so daß die Bearbeitungsschritte parallel ausgeführt werden.

30. Verfahren (401) gemäß Anspruch 1, wobei zum Ausführen des Verfahrensschritts Bearbeiten (430) Datensätze von einer Schnittstelle (120) gelesen (421) werden, von einem Erweiterungsprogramm (130) bearbeitet (430) werden, und von der Schnittstelle (120) wieder in die Matrix geschrieben (422) werden.

31. Verfahren (401) gemäß Anspruch 1, wobei eine Schnittstelle verwendet wird, die in XML definiert ist.

32. Verfahren (401) gemäß Anspruch 1, wobei ein Kennzeichnen eines Datensatzes erfolgt, nachdem der Schritt Bearbeiten (430) and diesem Datensatz durchgeführt wurde.

33. Verfahren (401) gemäß Anspruch 1, wobei ein Speichern von Zwischenergebnissen erfolgt.

34. Verfahren (401) gemäß Anspruch 1, wobei im Schritt Berechnen (440) alle Datensätze umfaßt werden.

35. Verfahren (401) gemäß Anspruch 1, wobei das Verdichten (432) von Datensätzen aus einer ersten Matrix und aus einer zweiten Matrix erfolgt.

36. Verfahren (401) gemäß Anspruch 1, wobei nach dem Bearbeiten (430) ein Testen ((426) auf Gleichheit von Matrixelementen erfolgt.

37. Verfahren (401) gemäß Anspruch 1, wobei Merkmale (M) und Klassen (K) verwendet werden als Zahlen, Texte, Kurzwörter, Datenbankzeiger, Hauptspeicherzeiger oder Tabellen.

38. Ausführen des Verfahrens (401) gemäß Anspruch 1 durch einen Computer (900), der sowohl Steuerprogramm (100) als auch Matrizen im Hauptspeicher verwaltet.

39. Anwendung des Verfahrens (401) gemäß Anspruch 24 im Finanzbereich, wobei eine solches Schema (200) verwendet wird, das die Kennfunktion (Y) als Wahrscheinlichkeit (Y_{B}) eines finanziellen Verlustes (Y_{A}) mit vorgegebener Größenordnung beschreibt.

40. Anwendung des Verfahrens (401) gemäß Anspruch 1 in betriebswirtschaftlichen Anwendungen, wobei unter den Merkmalen und Klassen solche sind, die der folgenden Gruppe angehören: Bonität, Branche, Bundesland, Ergebnis, Firma, Gemeinde, Gesellschaftsform, Kapital, Kosten, Kreditart, Kreis, Produkt, Postleitzahl, Region, Risiko, Verlust.

41. Computersystem (999) zum Ausführen des Verfahrens (401) gemäß der Ansprüche 1-40.

42. Programmträger (970) mit computerlesbarem Medium, auf dem computerlesbare Programmcodemittel hinterlegt sind, die zur Ausführung des Verfahren nach jedem der Ansprüche 1-40 dienen.

43. Computerprogrammprodukt (CPP, 101) mit Programminstruktionen, die einen Prozessor (910) dazu veranlassen, die Verfahrensschritte nach jedem der Ansprüche 1-40 auszuführen.

44. Computerprogrammprodukt (CPP, 101) mit Instruktionen für einen Prozessor, das Computerprogrammprodukt (101) zum Bestimmen einer Kennfunktion (Y) aus einer Matrix (X₀) mit einer vorgegebenen Zahl (Z₀) von Datensätzen (DS) mit klassifizierbaren Merkmalen (M), das Computerprogrammprodukt (101) **gekennzeichnet durch** Instruktionen zum Ausführen eines Verfahrensschritts Bearbeiten (430) in den beiden Bearbeitungsarten Anreichern (431) der Matrix mit Klassen (K) für die Merkmale (M), wobei die Zahl der Datensätze (DS) erhalten bleibt, und Verdichten (432), entsprechend den Klassen (K) unter Verringerung der Zahl der Datensätze (DS); sowie Instruktionen zum Ausführen eines Verfahrensschritts Berechnen (440) der Kennfunktion (Y) unter Berücksichtigung der Mehrzahl der Datensätze (DS) der bearbeiteten Matrix (X₁).
